# EUROPEAN PATENT APPLICATION

(11) **EP 4 851 600 A1**
(43) Date of publication of application: **09.12.2026**
(21) Application number: 25748139.0
(22) Date of filing: 27.01.2025
(51) Int. Cl.: G01N 1/04, B01J 19/00, B03B 5/00, G01N 37/00

(54) **FLOW PATH DEVICE**

(30) Priority: 30.01.2024 JP 2024011477
(71) Applicant: Kyocera Corporation, Kyoto-shi, Kyoto 612-8501 (JP)
(72) Inventor: FUNAMA Hikaru, Kyoto-shi, Kyoto 612-8501 (JP)
(74) Representative: Viering, Jentschura & Partner mbB Patent- und Rechtsanwälte
(86) International application number: PCT/JP2025/002361
(87) International publication number: WO 2025/164557

(57) **Abstract**

A fluidic device includes a channel section including a first channel, multiple second channels, a third channel, and a fourth channel. The first channel extends in a first direction and includes a first portion at an end in the first direction and a second portion at an end opposite to the first portion. The first channel includes first and second side surfaces facing each other in a second direction perpendicular to the first direction. Each of the second channels is open to the first side surface and is connected to the first channel between the first and second portions, and is narrower than the first channel. The third channel includes a first connection portion connected to the second portion and extending in the first direction. The fourth channel includes a second connection portion connected to the second portion and extending in a third direction forming an acute angle with the first direction. The second connection portion includes a third side surface adjacent to the first connection portion. The channel section includes a connection surface connecting the second and third side surfaces. A distance between a third portion, which connects the second side surface with the connection surface, and a fourth portion, which connects the third side surface with the connection surface, is less than or equal to a width of the first channel.

## Description

### CROSS-REFERENCE TO RELATED APPLICATION

This application claims priority to Japanese Patent Application No. 2024-11477 filed on January 30, 2024, the entire disclosure of which is incorporated herein by reference.

### TECHNICAL FIELD

The present disclosure relates to a fluidic device.

### BACKGROUND OF INVENTION

A known fluidic device includes a section (also referred to as a channel section) including multiple branched microchannels for sorting particles of a specific type from particles of another type in a liquid containing multiple types of particles, and includes multiple holes each continuous with the channel section and open at the outer surface of the fluidic device (refer to, for example, Patent Literature 1).

Recent fluidic devices are increasingly expected to increase the proportion of one or more particles of a specific type (e.g., multiple particles of a specific type) among multiple particles contained in a collection liquid after sorting.

### CITATION LIST

### PATENT LITERATURE

Patent Literature 1: WO 2023/153331

### SUMMARY

### PROBLEM TO BE SOLVED

One or more aspects of the present disclosure are directed to a fluidic device.

In one aspect, a fluidic device includes a channel section. The channel section includes a first channel, a plurality of second channels, a third channel, and a fourth channel. The first channel extends in a first direction. The first channel includes a first portion at an end of the first channel in the first direction and a second portion at an end of the first channel opposite to the first portion. The first channel includes a first side surface and a second side surface facing the first side surface in a second direction perpendicular to the first direction. Each of the plurality of second channels is open to the first side surface and is connected to the first channel between the first portion and the second portion, and is narrower than the first channel. The third channel includes a first connection portion connected to the second portion. The first connection portion extends in the first direction. The fourth channel includes a second connection portion connected to the second portion. The second connection portion extends in a third direction forming an acute angle with the first direction. The second connection portion includes a third side surface adjacent to the first connection portion. The channel section includes a connection surface connecting the second side surface and the third side surface. The second side surface and the connection surface are connected by a third portion. The third side surface and the connection surface are connected by a fourth portion. A distance between the third portion and the fourth portion is less than or equal to 1 times a width of the first channel in the second direction.

### BRIEF DESCRIPTION OF THE DRAWINGS

FIG. 1 is a schematic plan view of a fluidic device with an example structure.
FIG. 2 is a schematic front view of the fluidic device with an example structure.
FIG. 3 is a schematic plan view of a channel section and multiple holes in the fluidic device with example structures.
FIG. 4 is a schematic partial plan view of the channel section, illustrating an area IV defined by a rectangular dot-dash line in FIG. 3.
FIG. 5 is a schematic partial plan view of the channel section in FIG. 4, illustrating introduction of a first liquid and a second liquid into a first upstream portion of a main channel in an example.
FIG. 6 is a graph showing the relationship between the dimension of a connection surface and the white blood cell purity of a white blood cell collection liquid based on the results of a first example experiment.
FIG. 7 is a graph showing the relationship between the dimension of the connection surface and the white blood cell purity of the white blood cell collection liquid based on the results of a second example experiment.
FIG. 8 is a graph showing the relationship between the dimension of the connection surface and the white blood cell purity of the white blood cell collection liquid based on the results of a third example experiment.
FIG. 9 is a graph showing the relationship between the dimension of the connection surface and the white blood cell purity of the white blood cell collection liquid based on the results of a fourth example experiment.
FIG. 10 is a schematic partial plan view of a channel section in a fluidic device used in a fifth example experiment, illustrating the area corresponding to the area IV defined by the rectangular dot-dash line in FIG. 3 with an example structure.
FIG. 11 is a graph showing the relationship between the dimension of the connection surface and the white blood cell purity of the white blood cell collection liquid based on the results of the fifth example experiment.
FIG. 12 is a schematic partial plan view of a channel section in a fluidic device used in a sixth example experiment, illustrating the area corresponding to the area IV defined by the rectangular dot-dash line in FIG. 3 with an example structure.
FIG. 13 is a graph showing the relationship between the dimension of the connection surface and the white blood cell purity of the white blood cell collection liquid based on the results of the sixth example experiment.
FIG. 14 is a schematic partial plan view of the channel section, illustrating the area corresponding to the area IV defined by the rectangular dot-dash line in FIG. 3 with another first example structure.
FIG. 15 is a schematic partial plan view of the channel section, illustrating the area corresponding to the area IV defined by the rectangular dot-dash line in FIG. 3 with another second example structure.

### DESCRIPTION OF EMBODIMENTS

A known fluidic device includes a section (also referred to as a channel section) including branched microchannels for sorting multiple particles of a specific type (also referred to as first particles) from multiple particles of another type (also referred to as second particles) in a liquid containing multiple types of particles (also referred to as a first liquid or a processing target liquid), and includes multiple holes each continuous with the channel section and open at the outer surface of the fluidic device.

In such a fluidic device, for example, the channel section is not open at the outer surface of the fluidic device. The channel section includes, for example, a first channel (also referred to as a main channel) and multiple second channels (also referred to as branch channels) each connected to the main channel and narrower than the main channel. The multiple holes include a first inlet hole and a second inlet hole each continuous with an upstream portion (also referred to as a first upstream portion) of the main channel, an outlet hole (also referred to as a first outlet hole) continuous with a downstream portion (also referred to as a first downstream portion) of the main channel, and an outlet hole (also referred to as a second outlet hole) continuous with a downstream portion (also referred to as a second downstream portion) of each of the multiple branch channels opposite to the main channel. The main channel extends straight in a first direction. The main channel includes a side surface located in a second direction perpendicular to the first direction, and each of the multiple branch channels is open to the side surface of the main channel between the first upstream portion and the first downstream portion. The channel section further includes a channel (also referred to as a third channel) connecting the first inlet hole and the first upstream portion, and includes a channel (also referred to as a fourth channel) connecting the second inlet hole and the first upstream portion. The fourth channel includes a portion connected to the first upstream portion and extending in the second direction, and the portion is open to a side surface of the main channel located in the direction opposite to the second direction. The third channel includes a portion connected to the first upstream portion and extending in the first direction.

A processing target liquid is introduced into the first inlet hole toward the main channel. A liquid (also referred to as a second liquid or a flow-directing liquid) is introduced into the second inlet hole toward the main channel. In the main channel, the flow-directing liquid can direct the multiple types of particles in the processing target liquid toward the multiple branch channels. For example, the first particles may have a greater diameter than the second particles, and each of the multiple branch channels may have a width greater than the diameter of the second particles and less than the diameter of the first particles. In this case, a liquid containing multiple second particles flows from the main channel into the multiple branch channels, and is then discharged through the second outlet hole. A liquid containing multiple first particles (also referred to as a collection liquid or a collection liquid after sorting) flows through the first downstream portion of the main channel, and is then discharged through the first outlet hole. The collection liquid can thus be collected through the first outlet hole. This structure allows collection of the liquid containing multiple first particles (collection liquid) sorted from the liquid containing multiple second particles in the processing target liquid. When the processing target liquid is a sample containing blood, for example, the first particles may be white blood cells and the second particles may be red blood cells. Note that, in the fluidic device described above, the first particles and the second particles with different sizes can be sorted properly using the multiple branch channels when the center of gravity of each of the first particles and the second particles has a proper relationship with a drawing flow into the branch channels (described later). Thus, proper or improper sorting of the first particles from the second particles may not depend on the relationship between the diameter of each of the first particles and the second particles and the width of each of the branch channels. When, for example, each of the branch channels has a width greater than or substantially equal to the diameter of the first particles in the fluidic device, the first particles can be sorted from the second particles without flowing into the branch channels from the main channel.

In the fluidic device described above, the flow direction of the flow-directing liquid (also referred to as a second inflow direction) forms 90 degrees with the flow direction of the processing target liquid (also referred to as a first inflow direction) when the flow-directing liquid flowing from the fourth channel meets the processing target liquid flowing from the third channel in the first upstream portion of the main channel. To allow more collection liquid containing the multiple first particles to be collected per unit time in this structure, the flow velocity of the processing target liquid may be increased when the processing target liquid flows from the first inlet hole into the first upstream portion of the main channel through the third channel.

However, the processing target liquid flowing at an increased flow velocity may cause disturbances of the liquid flow in the main channel. With such disturbances in the main channel, the flow-directing liquid cannot easily continue directing the multiple types of particles in the processing target liquid toward the multiple branch channels. At positions closer to the first downstream portion in the main channel, in particular, the force applied by the flow-directing liquid (also referred to as an urging force) for directing the multiple types of particles in the processing target liquid toward the multiple branch channels may decrease. Thus, some of the multiple second particles in the processing target liquid may be more likely to flow to the first downstream portion. This may increase the number of second particles mixed in the collection liquid collected through the first outlet hole, thus reducing the proportion of one or more first particles (e.g., multiple first particles) among multiple particles contained in the collection liquid. When the processing target liquid is a sample containing blood, for example, the proportion (also referred to as white blood cell purity) of one or more white blood cells (e.g., multiple white blood cells) among all blood cells in the collection liquid (also referred to as a white blood cell collection liquid) may decrease. All blood cells include white blood cells and red blood cells.

To increase the proportion of one or more first particles (e.g., multiple first particles) among multiple particles contained in the collection liquid, for example, disturbances of the liquid flow in the main channel may be reduced. More specifically, for example, the second inflow direction of the flow-directing liquid may form an acute angle less than 90 degrees with the first inflow direction of the processing target liquid when the flow-directing liquid meets the processing target liquid in the first upstream portion of the main channel.

However, when the second inflow direction forms an acute angle with the first inflow direction, the proportion of one or more particles of a specific type (e.g., multiple first particles) among multiple particles contained in the collection liquid is to be increased further.

In other words, fluidic devices are to be improved to increase the proportion of one or more particles of a specific type (e.g., multiple first particles) among multiple particles contained in the collection liquid.

The inventor of the present disclosure has developed a technique for increasing the proportion of one or more particles of a specific type (e.g., multiple particles of a specific type) among multiple particles contained in the collection liquid in a fluidic device.

Various embodiments and examples of the present disclosure are described below with reference to the drawings. In the drawings, the same reference numerals denote components with the same or similar structures and functions. The components with the same or similar structures and functions will not be described repeatedly. The drawings are schematic.

The drawings may include a right-handed XYZ coordinate system for convenience. A positive Z-direction is hereafter defined as a vertically upward direction (or also simply referred to as an upward direction). A vertically downward direction is also referred to as a negative Z-direction. The direction opposite to a positive X-direction is also referred to as a negative X-direction. The direction opposite to a positive Y-direction is also referred to as a negative Y-direction. The drawings may also include a diagram including arrows indicating a first direction D1, a second direction D2, a third direction D3, and a fourth direction D4 for convenience.

A "channel" described hereafter has a structure that allows a liquid to flow. In one or more embodiments of the present disclosure, the dimension of the channel in a direction perpendicular to a direction in which the channel extends is referred to as a width of the channel when the channel is viewed in plan in the negative Z-direction as a direction perpendicular to both the negative Y-direction as the first direction D1 and the positive X-direction as the second direction D2. A channel having a relatively small width indicates that the channel is relatively narrow. A channel having a relatively large width indicates that the channel is relatively wide. In one or more embodiments of the present disclosure, "as viewed in plan" refers to being viewed in plan in the negative Z-direction unless otherwise specified.

### 1. Example Schematic Structure of Fluidic Device

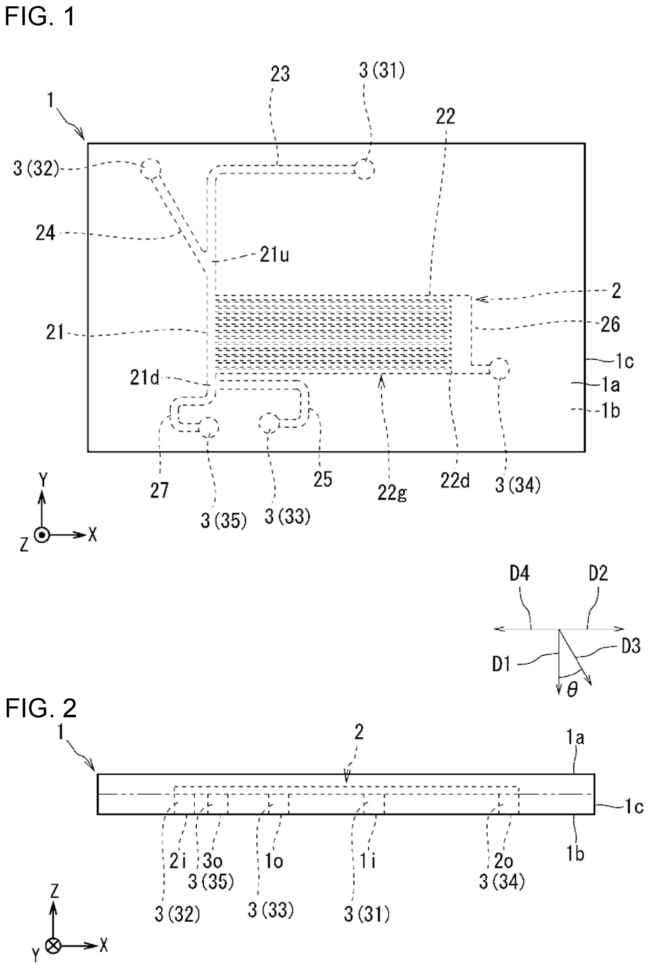

FIG. 1 is a schematic plan view of a fluidic device 1 as a sorting device with an example structure according to one embodiment. FIG. 2 is a schematic front view of the fluidic device 1 with an example structure according to one embodiment. As described later, the fluidic device 1 may function as a device for sorting multiple particles (also referred to as first particles) Pa11 of a specific type from multiple particles (also referred to as second particles) Pa12 of another type in a liquid (also referred to as a first liquid) L1 containing multiple types of particles Pa1.

In one embodiment, the fluidic device 1 is, for example, a plate. The fluidic device 1 includes, for example, an upper surface 1a as a first surface and a lower surface 1b as a second surface opposite to the upper surface 1a. The fluidic device 1 includes, for example, a side surface 1c as a third surface connecting the upper surface 1a and the lower surface 1b. In other words, the outer surface of the fluidic device 1 includes the upper surface 1a, the lower surface 1b, and the side surface 1c. The upper surface 1a is located in the positive Z-direction relative to the lower surface 1b.

In the examples in FIGs. 1 and 2, the upper surface 1a faces in the positive Z-direction. In other words, the upper surface 1a is parallel to an XY plane and has the normal in the positive Z-direction. The lower surface 1b faces in the negative Z-direction. In other words, the lower surface 1b is parallel to an XY plane and has the normal in the negative Z-direction. Each of the upper surface 1a and the lower surface 1b is, for example, substantially flat and rectangular.

The fluidic device 1 has a thickness of, for example, about 1 to 5 millimeters (mm). The thickness of the fluidic device 1 refers to the dimension of the fluidic device 1 in the positive Z-direction. The upper surface 1a and the lower surface 1b of the fluidic device 1 each have a width of, for example, about 10 to 50 mm. The width of the upper surface 1a refers to the dimension of the upper surface 1a in the positive X-direction. The width of the lower surface 1b refers to the dimension of the lower surface 1b in the positive X-direction. The upper surface 1a and the lower surface 1b of the fluidic device 1 each have a length of, for example, about 10 to 50 mm. The length of the upper surface 1a refers to the dimension of the upper surface 1a in the positive Y-direction. The length of the lower surface 1b refers to the dimension of the lower surface 1b in the positive Y-direction.

The fluidic device 1 includes a channel section 2. In an example of one embodiment, the fluidic device 1 includes multiple holes 3. In an example of one embodiment, the channel section 2 is not open at the outer surface of the fluidic device 1. Each of the multiple holes 3 is continuous with the channel section 2 and open at the outer surface of the fluidic device 1. In one or more embodiments of the present disclosure, "a first portion being continuous with a second portion" refers to the first portion being directly continuous with the second portion to allow a fluid such as a liquid to flow between the first portion and the second portion or refers to the first portion being continuous with the second portion through another portion (also referred to as a third portion) to allow a fluid to flow between the first portion and the second portion. The first portion, the second portion, and the third portion are each a portion in which a fluid can flow, such as a channel or a hole. For example, the channel section 2 is located inside the fluidic device 1. In other words, for example, the channel section 2 is not open at the upper surface 1a, the lower surface 1b, or the side surface 1c. FIG. 2 illustrates a simplified structure of the channel section 2.

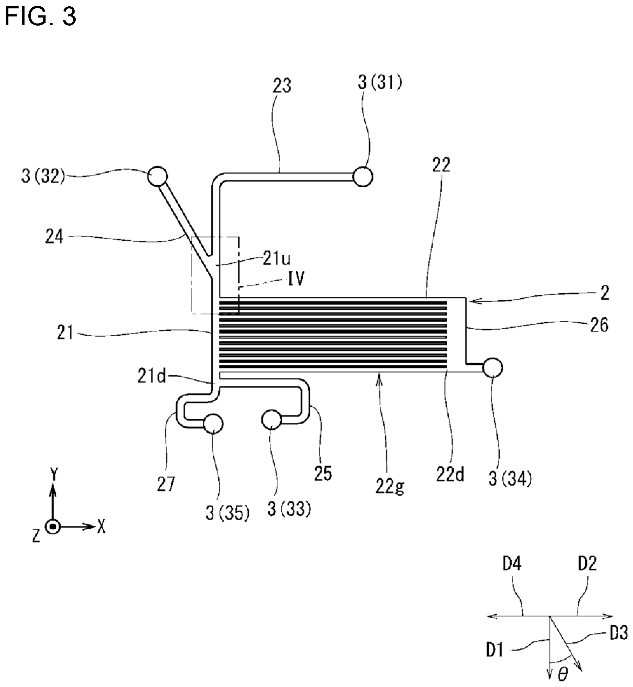

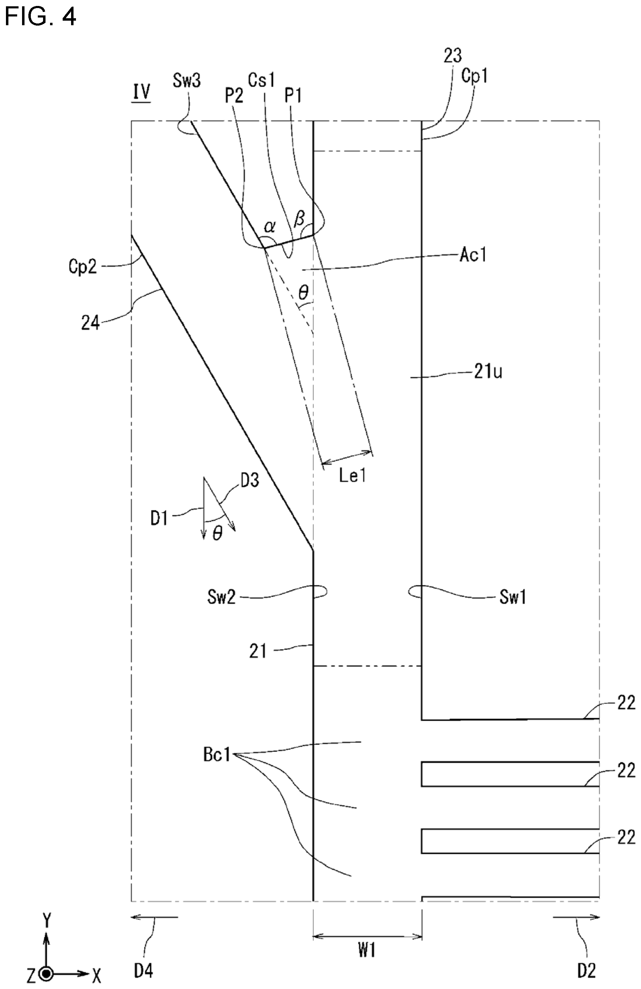

FIG. 3 is a schematic plan view of the channel section 2 and the multiple holes 3 in the fluidic device 1 with example structures. In FIG. 3, the outer edge of the fluidic device 1 is not illustrated, and the outer edge of each of the channel section 2, a first inlet hole 31, a second inlet hole 32, a first outlet hole 33, a second outlet hole 34, and a third outlet hole 35 are drawn with a solid line. FIG. 4 is a schematic partial plan view of the channel section 2. More specifically, FIG. 4 is a schematic plan view illustrating an area IV defined by a rectangular dot-dash line in FIG. 3. In FIG. 4, the outer edge of the channel section 2 is drawn with a solid line.

The channel section 2 includes, for example, multiple channels connected to one another without being open at the outer surface of the fluidic device 1. Each of the multiple channels may have, for example, a rectangular cross section. The cross section of a channel may be an imaginary cross section of the channel along an imaginary plane perpendicular to the direction in which the channel extends. As illustrated in FIGs. 1 to 3, the channel section 2 extends along, for example, an XY plane.

The channel section 2 includes a main channel 21 as a first channel, multiple branch channels 22 as multiple second channels, a first introduction channel 23 as a third channel, and a second introduction channel 24 as a fourth channel.

The main channel 21 extends in the negative Y-direction as the first direction D1. The main channel 21 may extend, for example, straight in the negative Y-direction as the first direction D1. The main channel 21 includes a first portion (also referred to as a first downstream portion) 21d and a second portion (also referred to as a first upstream portion) 21u. The first downstream portion 21d is located in the negative Y-direction as the first direction D1 in the main channel 21. The first downstream portion 21d may be located at an end of the main channel 21 in the negative Y-direction as the first direction D1. The first upstream portion 21u is located opposite to the first downstream portion 21d in the main channel 21. In other words, the first upstream portion 21u is located at an end of the main channel 21 opposite to the first downstream portion 21d. In still other words, the first upstream portion 21u may be a portion of the main channel 21 located at an end opposite to the first downstream portion 21d. In still other words, the first upstream portion 21u may be located at an end of the main channel 21 in the positive Y-direction as a direction opposite to the first direction D1. In other words, the main channel 21 extends from the first upstream portion 21u to the first downstream portion 21d in the negative Y-direction as the first direction D1. In the example in FIG. 4, the first upstream portion 21u is a rectangular portion imaginarily defined by thin two-dot-dash lines in the main channel 21.

The main channel 21 includes a first side surface Sw1 and a second side surface Sw2. For example, the first side surface Sw1 is a side surface of the main channel 21 in the positive X-direction as the second direction D2 perpendicular to the negative Y-direction as the first direction D1. The second side surface Sw2 faces the first side surface Sw1 in the positive X-direction as the second direction D2. In other words, the second side surface Sw2 is a side surface of the main channel 21 in the negative X-direction as the fourth direction D4 opposite to the second direction D2. In still other words, the first side surface Sw1 may be a side surface of the main channel 21 located in the second direction D2, and the second side surface Sw2 may be a side surface of the main channel 21 located in the fourth direction D4.

Each of the multiple branch channels 22 is connected to the main channel 21 and is narrower than the main channel 21. Each of the multiple branch channels 22 is open to the first side surface Sw1 of the main channel 21 between the first upstream portion 21u and the first downstream portion 21d of the main channel 21. In other words, each of the multiple branch channels 22 is open to the first side surface Sw1 between the first downstream portion 21d and the first upstream portion 21u and is connected to the main channel 21. In still other words, the main channel 21 includes multiple areas (also referred to as connection areas) Bc1 connected to the respective multiple branch channels 22. For example, the multiple branch channels 22 branch from the main channel 21 at different positions in the negative Y-direction as the first direction D1. In other words, the multiple connection areas Bc1 connected to the respective multiple branch channels 22 are at different positions in the negative Y-direction as the first direction D1.

In the examples in FIGs. 1 to 3, each of the multiple branch channels 22 extends in the positive X-direction as the second direction D2. In other words, the multiple branch channels 22 are arranged in the negative Y-direction as the first direction D1. The multiple branch channels 22 form, for example, a group (also referred to as a branch channel group) 22g of branch channels 22. The multiple branch channels 22 are, for example, tens to hundreds of branch channels 22. FIGs. 1 to 3 illustrate thirteen branch channels 22 for convenience.

Each of the multiple branch channels 22 includes, for example, a portion (also referred to as a second downstream portion) 22d opposite to the main channel 21. In the examples in FIGs. 1 to 3, the second downstream portion 22d of each of the multiple branch channels 22 is located at an end of the branch channel 22 in the positive X-direction as the second direction D2.

The first introduction channel 23 is connected to the first upstream portion 21u of the main channel 21. The first introduction channel 23 includes a portion (also referred to as a first connection portion) Cp1 connected to the first upstream portion 21u. The first connection portion Cp1 extends in the negative Y-direction as the first direction D1. For example, the first connection portion Cp1 may extend straight in the negative Y-direction as the first direction D1 toward the first upstream portion 21u. In other words, the first introduction channel 23 is connected to the first upstream portion 21u of the main channel 21 in the negative Y-direction as the first direction D1. The first introduction channel 23 is wider than each of the multiple branch channels 22. The first connection portion Cp1 of the first introduction channel 23 may have the same width as the first upstream portion 21u of the main channel 21.

The second introduction channel 24 is connected to the first upstream portion 21u of the main channel 21. The second introduction channel 24 includes a portion (also referred to as a second connection portion) Cp2 connected to the first upstream portion 21u. For example, the second connection portion Cp2 is open to the second side surface Sw2 of the main channel 21. In other words, for example, the second connection portion Cp2 is open to the second side surface Sw2 in the first upstream portion 21u and is connected to the main channel 21. The second connection portion Cp2 extends in the third direction D3 forming an acute angle with the negative Y-direction as the first direction D1. For example, the second connection portion Cp2 may extend straight toward the first upstream portion 21u in the third direction D3 forming an acute angle with the negative Y-direction as the first direction D1. The acute angle may be an angle θ less than 90 degrees. The angle θ is, in other words, the angle between the first direction D1 and the third direction D3. In this example, the second introduction channel 24 is connected to the first upstream portion 21u of the main channel 21 in the third direction D3. In other words, the second connection portion Cp2 is inclined with respect to the main channel 21 toward the first connection portion Cp1. In still other words, a vector in the third direction D3 in which the second connection portion Cp2 extends toward the first upstream portion 21u forms the acute angle θ with a vector in the first direction D1 in which the main channel 21 extends from the first upstream portion 21u toward the first downstream portion 21d. The second introduction channel 24 is wider than each of the multiple branch channels 22. The angle θ may be, for example, 15 to 45 degrees inclusive. The angle θ may be 30 degrees. In the example in FIG. 4, the angle θ is 30 degrees.

The second introduction channel 24 includes a side surface (also referred to as a third side surface) Sw3 adjacent to the first connection portion Cp1. More specifically, the second connection portion Cp2 of the second introduction channel 24 includes the third side surface Sw3 adjacent to the first connection portion Cp1. In this example, an imaginary plane along the third side surface Sw3 of the second connection portion Cp2 forms the acute angle θ with an imaginary plane along the second side surface Sw2 of the main channel 21.

The channel section 2 includes a surface (also referred to as a connection surface) Cs1 connecting the second side surface Sw2 of the main channel 21 and the third side surface Sw3 of the second connection portion Cp2. In other words, in the channel section 2, the corner at which the first upstream portion 21u of the main channel 21 and the second connection portion Cp2 of the second introduction channel 24 meet at an acute angle is truncated. In still other words, the channel section 2 includes a portion (also referred to as an expansion portion) Ac1 that is an expanded portion of the channel between the first upstream portion 21u of the main channel 21 and the second connection portion Cp2 of the second introduction channel 24. The connection surface Cs1 may be, for example, a rectangular flat surface.

In the example in FIG. 4, the expansion portion Ac1 is an imaginary triangular portion defined by a thin two-dot-dash line that is an imaginary extension of a line from the third side surface Sw3 to the first upstream portion 21u in the third direction D3, a thin two-dot-dash line imaginarily indicating the outer edge of the first upstream portion 21u, and the connection surface Cs1. In other words, the expansion portion Ac1 is a triangular portion that is an expanded portion of the channel (at least one of the main channel 21 or the second introduction channel 24) as viewed in plan. The expansion portion Ac1 may substantially have the shape of, for example, an isosceles triangle with its base along the connection surface Cs1 as viewed in plan. In other words, an angle α between the third side surface Sw3 and the connection surface Cs1 may be equal to or substantially equal to an angle β between the second side surface Sw2 and the connection surface Cs1. When the angle θ is 30 degrees, for example, each of the angle α and the angle β may be 105 degrees.

The connection surface Cs1 has a dimension less than or equal to a width (also referred to as a first width) W1 of the main channel 21 when the channel section 2 is viewed in plan. The width (first width) W1 of the main channel 21 refers to the width of the main channel 21 in the positive X-direction as the second direction D2. The second side surface Sw2 of the main channel 21 and the connection surface Cs1 are connected by a third portion P1. The third side surface Sw3 of the second connection portion Cp2 of the second introduction channel 24 and the connection surface Cs1 are connected by a fourth portion P2. The distance between the third portion P1, which connects the second side surface Sw2 of the main channel 21 with the connection surface Cs1, and the fourth portion P2, which connects the third side surface Sw3 of the second connection portion Cp2 with the connection surface Cs1, is referred to as a first distance Le1 when the channel section 2 is viewed in plan. In this case, the first distance Le1 may be less than or equal to 1 times the first width W1. The first distance Le1 may be 0.1 to 0.5 times inclusive the first width W1. Each of the third portion P1 and the fourth portion P2 may be a point as the corner or may be a short line as viewed in plan.

The multiple holes 3 include the first inlet hole 31 as a first hole, the second inlet hole 32 as a second hole, the first outlet hole 33 as a third hole, and the second outlet hole 34 as a fourth hole. In one embodiment, for example, the multiple holes 3 include the third outlet hole 35 as a fifth hole.

The first inlet hole 31 is continuous with the first upstream portion 21u through the first introduction channel 23. The first inlet hole 31 may be connected to the first introduction channel 23. More specifically, the first inlet hole 31 may be connected to an end of the first introduction channel 23 opposite to the first upstream portion 21u. In other words, the first inlet hole 31 is continuous with the first upstream portion 21u. The first inlet hole 31 has, for example, a diameter greater than or equal to the width of the first introduction channel 23. In the examples in FIGs. 1 and 3, the first introduction channel 23 is an L-shaped channel including a portion extending from the first inlet hole 31 in the negative X-direction as the fourth direction D4 and a portion extending in the negative Y-direction as the first direction D1. These portions are connected in the stated order. In other words, the first introduction channel 23 extends from the first inlet hole 31 toward the first upstream portion 21u in the negative X-direction and the negative Y-direction in this order. The portion of the first introduction channel 23 between the first inlet hole 31 and the first connection portion Cp1 may have any of various shapes other than an L shape.

The second inlet hole 32 is continuous with the first upstream portion 21u through the second introduction channel 24. The second inlet hole 32 may be connected to the second introduction channel 24. More specifically, the second inlet hole 32 may be connected to an end of the second introduction channel 24 opposite to the first upstream portion 21u. In other words, the second inlet hole 32 is continuous with the first upstream portion 21u. The second inlet hole 32 has, for example, a diameter greater than or equal to the width of the second introduction channel 24. In the examples in FIGs. 1 and 3, the second introduction channel 24 is a straight channel extending from the second inlet hole 32 in the third direction D3. The portion of the second introduction channel 24 between the second inlet hole 32 and the second connection portion Cp2 may have any of various shapes other than a straight shape extending in the third direction D3.

The first outlet hole 33 is continuous with the first downstream portion 21d of the main channel 21. The first outlet hole 33 may be, for example, connected to the first downstream portion 21d through a first discharge channel 25 as a fifth channel. In other words, the channel section 2 may include, for example, the first discharge channel 25 connecting the first outlet hole 33 and the first downstream portion 21d. The first discharge channel 25 is wider than each of the multiple branch channels 22. The width of the first discharge channel 25 is greater than the diameter of each of the multiple first particles Pa11 (described later). This structure allows the multiple first particles Pa11 to be introduced into the first discharge channel 25 after the first particles Pa11 reach the first downstream portion 21d through the portion of the main channel 21 connected to the multiple branch channels 22. The fluidic device 1 can thus discharge a liquid containing the multiple first particles Pa11 through the first discharge channel 25 and then through the first outlet hole 33. In the fluidic device 1, the liquid containing the multiple first particles Pa11 may be collected from, for example, the first downstream portion 21d through the first outlet hole 33 as a collection liquid. The first outlet hole 33 may have a diameter greater than or equal to the width of the first discharge channel 25. In one embodiment, the first discharge channel 25 includes a portion connected to the first downstream portion 21d, and the portion is open to a side surface of the first downstream portion 21d in the positive X-direction as the second direction D2. The side surface of the first downstream portion 21d in the positive X-direction as the second direction D2 may be the side surface of the first downstream portion 21d located in the positive X-direction as the second direction D2. In the examples in FIGs. 1 and 3, the first discharge channel 25 is a U-shaped channel including a portion connected to the first downstream portion 21d and extending in the positive X-direction as the second direction D2, a portion extending in the negative Y-direction as the first direction D1, and a portion extending in the negative X-direction as the fourth direction D4. These portions are connected in the stated order. In other words, the first discharge channel 25 extends in the positive X-direction, the negative Y-direction, and the negative X-direction in this order.

The second outlet hole 34 is continuous with the second downstream portion 22d of each of the multiple branch channels 22. The second outlet hole 34 may be, for example, connected to the second downstream portion 22d of each of the multiple branch channels 22 through a second discharge channel 26 as a sixth channel. In other words, the channel section 2 may include, for example, the second discharge channel 26 connecting the second outlet hole 34 and the second downstream portion 22d of each of the multiple branch channels 22. More specifically, for example, the multiple branch channels 22 may be connected to the second discharge channel 26 at different positions in the negative Y-direction as the first direction D1. The second discharge channel 26 is, for example, wider than each of the multiple branch channels 22 to have a volume sufficient to collectively guide the liquid from the multiple branch channels 22 into the second outlet hole 34. In the examples in FIGs. 1 and 3, the edge of the second discharge channel 26 in the positive X-direction is located near the second outlet hole 34. The second outlet hole 34 may have, for example, a diameter greater than or equal to the width of an end portion of the second discharge channel 26 in the negative Y-direction connected to the second outlet hole 34. The fluidic device 1 can thus discharge a liquid containing the multiple second particles Pa12 through the second discharge channel 26 and then through the second outlet hole 34 after the second particles Pa12 are sorted by the multiple branch channels 22 (described later). In the examples in FIGs. 1 and 3, the second discharge channel 26 is an L-shaped channel including a wider portion and a narrower portion connected in this order. The wider portion is connected to each of the multiple second downstream portions 22d of the multiple branch channels 22. The wider portion is wider in the positive X-direction as the second direction D2 and extends straight in the negative Y-direction as the first direction D1. The narrower portion is narrower in the positive Y-direction as the first direction D1 and extends straight by a short distance in the positive X-direction as the second direction D2. In other words, the second discharge channel 26 extends in the negative Y-direction and the positive X-direction in this order to collectively connect the outlets of the multiple branch channels 22 to the second outlet hole 34.

The third outlet hole 35 is continuous with the first downstream portion 21d of the main channel 21. The third outlet hole 35 may be, for example, connected to the first downstream portion 21d through a third discharge channel 27 as a seventh channel. In other words, the channel section 2 may include, for example, the third discharge channel 27 connecting the third outlet hole 35 and the first downstream portion 21d. The third discharge channel 27 may be, for example, wider than each of the multiple branch channels 22. The third discharge channel 27 may be as wide as or wider than the main channel 21. The third outlet hole 35 may have, for example, a diameter greater than or equal to the width of the third discharge channel 27. The fluidic device 1 can thus discharge a liquid through the third discharge channel 27 and then through the third outlet hole 35. The liquid is a remaining liquid of the first liquid L1 resulting from sorting and removing most of the second particles Pa12 from the first liquid L1 with the multiple branch channels 22 and collecting the collection liquid from the resultant liquid through, for example, the first discharge channel 25, as described later. Note that the remaining liquid may contain the first particles Pa11 and the second particles Pa12 that have not been removed by the sorting and the collection. In one embodiment, the third discharge channel 27 includes a portion connected to the first downstream portion 21d and extending in the negative Y-direction as the first direction D1. In the examples in FIGs. 1 and 3, the third discharge channel 27 includes a portion connected to the first downstream portion 21d and extending in the negative Y-direction as the first direction D1, a portion extending in the negative X-direction as the fourth direction D4, a portion extending in the negative Y-direction as the first direction D1, and a portion extending in the positive X-direction as the second direction D2 and connected to the third outlet hole 35. These portions are connected in the stated order. In other words, the third discharge channel 27 extends in the negative Y-direction, the negative X-direction, the negative Y-direction, and the positive X-direction in this order.

In one embodiment, for example, the first inlet hole 31, the second inlet hole 32, the first outlet hole 33, the second outlet hole 34, and the third outlet hole 35 are each open at the lower surface 1b without being open at the upper surface 1a. For example, the first inlet hole 31 includes a portion (also referred to as a first inlet opening or a first inlet) 1i that is open at the lower surface 1b. The second inlet hole 32 includes a portion (also referred to as a second inlet opening or a second inlet) 2i that is open at the lower surface 1b. The first outlet hole 33 includes a portion (also referred to as a first outlet opening or a first outlet) 1o that is open at the lower surface 1b. The second outlet hole 34 includes a portion (also referred to as a second outlet opening or a second outlet) 2o that is open at the lower surface 1b. The third outlet hole 35 includes a portion (also referred to as a third outlet opening or a third outlet) 3o that is open at the lower surface 1b.

The material of the fluidic device 1 (the material forming the fluidic device 1) is, for example, a resin such as polydimethylsiloxane (PDMS). PDMS is highly transferable in, for example, resin molding using molds. A material being transferable refers to a material being capable of forming, on a resin-molded product, fine protrusions and recesses corresponding to a fine pattern on the mold.

The fluidic device 1 may be manufactured by, for example, bonding a plate-like member (also referred to as a first plate) and another plate-like member (also referred to as a second plate). More specifically, the first plate includes, on one surface, fine protrusions and recesses corresponding to the pattern of the channel section 2. The second plate includes five through-holes corresponding to the first inlet hole 31, the second inlet hole 32, the first outlet hole 33, the second outlet hole 34, and the third outlet hole 35. The first plate and the second plate are bonded together with one surface of the second plate covering the fine protrusions and recesses on the first plate, thus manufacturing the fluidic device 1.

The first plate with the fine protrusions and recesses on one surface may be formed by, for example, resin molding. The second plate with the five through-holes may be formed by, for example, resin molding or by punching a resin-molded flat plate to form the five through-holes. The first plate and the second plate may be bonded together without an adhesive by, for example, modifying one surface of the first plate and one surface of the second plate and by placing these surfaces in contact with each other. The surface modification is achieved by, for example, irradiation with oxygen plasma or irradiation with ultraviolet (UV) light using an excimer lamp. For example, one surface of the first plate and one surface of the second plate may be made of the same resin. This allows stronger bonding of the surface of the first plate and the surface of the second plate by surface modification.

### 2. Overall Example Functions of Fluidic Device

The functions of the fluidic device 1 are roughly described below.

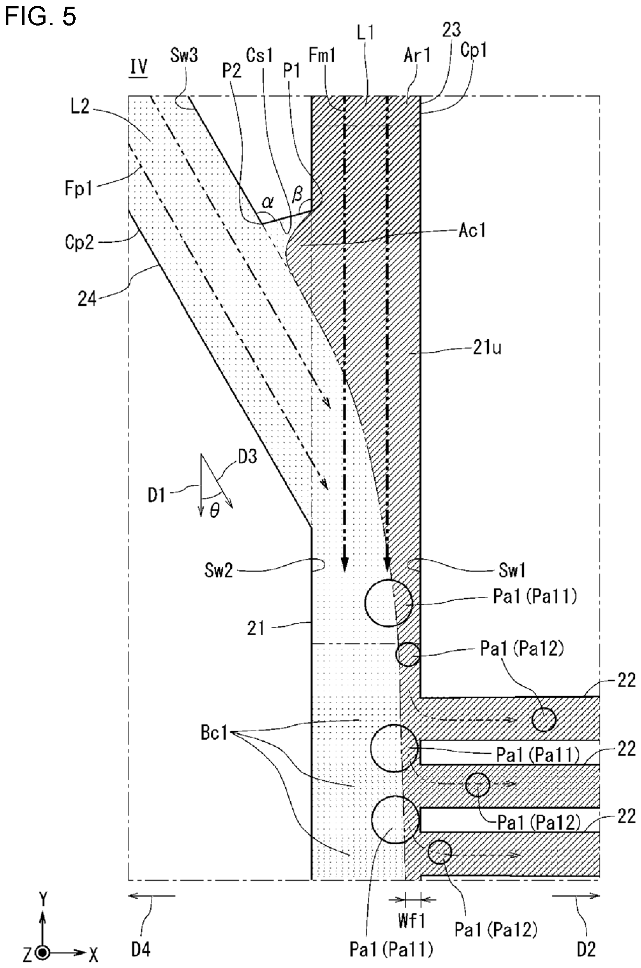

FIG. 5 is a schematic partial plan view of the channel section 2 in FIG. 4, illustrating introduction, into the first upstream portion 21u of the main channel 21, the first liquid (also referred to as a processing target liquid) L1 to be processed and a liquid (also referred to as a second liquid or a flow-directing liquid) L2 different from the first liquid L1 in an example.

The first liquid L1 is introduced into the channel section 2 in the fluidic device 1. The first liquid L1 contains the multiple first particles Pa11 and the multiple second particles Pa12 as the multiple types of particles Pa1. Each of the multiple first particles Pa11 is a particle to be sorted as a particle of a specific type (also referred to as a sorting target particle). Each of the multiple second particles Pa12 is a particle of another type (also referred to as a non-target particle) different from the particle of the specific type. The fluidic device 1 performs a process (also referred to as a particle sorting process) on the multiple types of particles Pa1 contained in the first liquid L1 to sort the multiple first particles Pa11 from the multiple second particles Pa12. The multiple types of particles Pa1 contained in the first liquid L1 may be three or more types of particles. In the example described below, the first particles Pa11 are of a single type, and the second particles Pa12 are of a single type.

During the particle sorting process performed with the fluidic device 1, for example, the first liquid L1 is introduced into the channel section 2 from the first inlet hole 31, and the second liquid L2 is introduced into the channel section 2 from the second inlet hole 32. Specific examples and functions of the second liquid L2 will be described later.

For example, a tube (also referred to as a first tube) may be externally connected to the fluidic device 1 to introduce the first liquid L1 into the channel section 2 from the first inlet hole 31. To connect the first tube to the fluidic device 1, for example, the lower surface 1b of the fluidic device 1 may include a cylindrical portion protruding in the negative Z-direction and surrounding the first inlet hole 31 about a Z-axis as viewed in plan. The first tube may include, for example, a connector at one end (also referred to as a first end) in the longitudinal direction of the first tube for connection to the first inlet hole 31. The first tube may be connected to a unit (also referred to as a first feeder) for feeding the first liquid L1 to the first inlet hole 31 through the first tube at an end (also referred to as a second end) of the first tube different from the first end in the longitudinal direction. The first feeder may include, for example, a pump such as a syringe pump or a plunger pump to feed the first liquid L1. The first feeder may be connected to the second end of the first tube with, for example, a three-way valve. In this case, for example, the three-way valve may be switched to discharge gas from the channel section 2 through the first inlet hole 31, the first tube, and the three-way valve when the second liquid L2 is introduced from the second inlet hole 32 to fill the channel section 2 with the second liquid L2 as a preparation (also referred to as an advance preparation) performed with the fluidic device 1 immediately before the particle sorting process.

For example, a tube (also referred to as a second tube) may be externally connected to the fluidic device 1 to introduce the second liquid L2 into the channel section 2 from the second inlet hole 32. To connect the second tube to the fluidic device 1, for example, the lower surface 1b of the fluidic device 1 may include a cylindrical portion protruding in the negative Z-direction and surrounding the second inlet hole 32 about a Z-axis as viewed in plan. The second tube may include, for example, a connector at one end (also referred to as a third end) in the longitudinal direction of the second tube for connection to the second inlet hole 32. The second tube may be connected to a unit (also referred to as a second feeder) for feeding the second liquid L2 to the second inlet hole 32 through the second tube at an end (also referred to as a fourth end) of the second tube different from the third end in the longitudinal direction. The second feeder may include, for example, a pump such as a syringe pump or a plunger pump to feed the second liquid L2.

For example, the first liquid L1 introduced into the fluidic device 1 from the first inlet hole 31 flows into the first upstream portion 21u of the main channel 21 through the first introduction channel 23. In other words, the first inlet hole 31 serves as a hole for introducing the first liquid L1 into the main channel 21. The first introduction channel 23 serves as, for example, a channel for introducing the first liquid L1 into the first upstream portion 21u of the main channel 21.

For example, the second liquid L2 introduced into the fluidic device 1 from the second inlet hole 32 flows into the first upstream portion 21u of the main channel 21 through the second introduction channel 24. In other words, the second inlet hole 32 serves as a hole for introducing the second liquid L2 into the main channel 21. The second introduction channel 24 serves as, for example, a channel for introducing the second liquid L2 into the first upstream portion 21u of the main channel 21.

In FIG. 5, arrows Fp1 drawn with two-dot-dash lines indicate the direction in which the second liquid L2 flows. This direction is aligned with the third direction D3. In FIG. 5, arrows Fm1 drawn with two-dot-dash lines thicker than the arrows Fp1 indicate the direction in which the first liquid L1 from the first introduction channel 23 mainly flows (also referred to as a main flow) in the main channel 21. This direction of the main flow is aligned with the negative Y-direction as the first direction D1. In FIG. 5, the first upstream portion 21u is illustrated as a rectangular portion imaginarily defined by a thin two-dot-dash line in the main channel 21, as in FIG. 4.

FIG. 5 schematically illustrates sorting of the first particles Pa11 and the second particles Pa12 from each other, with the first particles Pa11 having a greater diameter than the second particles Pa12. More specifically, in the illustrated example, each of the multiple branch channels 22 has a width greater than the diameter of the second particles Pa12 and less than the diameter of the first particles Pa11. The width of each of the multiple branch channels 22 refers to the dimension of the branch channel 22 in the negative Y-direction as the first direction D1. In this example, the first liquid L1 may contain the multiple types of particles Pa1 including the multiple first particles Pa11 with a diameter greater than the width of each of the multiple branch channels 22 and the multiple second particles Pa12 with a diameter less than the width of each of the multiple branch channels 22.

At least the main channel 21 and the first introduction channel 23 each have a width greater than the diameter of both the first particles Pa11 and the second particles Pa12. The width of the main channel 21 refers to the dimension of the main channel 21 in the positive X-direction as the second direction D2. The width of the first introduction channel 23 in a portion near the main channel 21 refers to the dimension of the first introduction channel 23 in the positive X-direction as the second direction D2. The width of the first introduction channel 23 in a portion extending in the negative X-direction as the fourth direction D4 refers to the dimension of the first introduction channel 23 in the negative Y-direction as the first direction D1.

While moving through the main channel 21 in the negative Y-direction as the first direction D1, the multiple second particles Pa12 receive a force to be directed in the positive X-direction as the second direction D2, and are thus mostly introduced into any of the multiple branch channels 22. The multiple second particles Pa12 contained in the first liquid L1 mostly flow through any of the multiple branch channels 22 and then through the second discharge channel 26, and are discharged out of the fluidic device 1 through the second outlet hole 34. In this example, the cross-sectional area and the length of each of the multiple branch channels 22 connected to the main channel 21 are adjusted to cause the multiple second particles Pa12 to be mostly introduced into any of the multiple branch channels 22 from the main channel 21 and be sorted from the multiple first particles Pa11. The multiple second particles Pa12 discharged out of the fluidic device 1 through the second outlet hole 34 may be, for example, used for a specific process or simply collected at another device connected to the second outlet hole 34 directly or through another member such as a tube. The multiple second particles Pa12 discharged out of the fluidic device 1 through the second outlet hole 34 may be discarded, for example, directly or through another member such as a tube.

The multiple first particles Pa11 move through the main channel 21 in the negative Y-direction as the first direction D1 substantially without being introduced into the multiple branch channels 22. The multiple first particles Pa11 mostly flow through the main channel 21 and then through the first discharge channel 25, and are discharged out of the fluidic device 1 through the first outlet hole 33. In this example, the first discharge channel 25 has a width greater than the first particles Pa11. The multiple first particles Pa11 reaching the first downstream portion 21d can flow into the first discharge channel 25, rather than into the third discharge channel 27, under the same force that urges the multiple second particles Pa12 to mostly flow into any of the multiple branch channels 22 from the main channel 21. The multiple first particles Pa11 discharged out of the fluidic device 1 through the first outlet hole 33 may be, for example, used for a specific process or simply collected at another device connected to the first outlet hole 33 directly or through another member such as a tube. In other words, a liquid (collection liquid) containing the multiple first particles Pa11 discharged out of the fluidic device 1 through the first outlet hole 33 is collected.

A component (also referred to as a remaining component) of the first liquid L1 remains after the multiple second particles Pa12 flowing into any of the multiple branch channels 22 are removed and the multiple first particles Pa11 flowing into the first discharge channel 25 are removed. Such a remaining component flows into the third discharge channel 27. The remaining component flowing through the third discharge channel 27 may be discharged through the third outlet hole 35. The remaining component discharged out of the fluidic device 1 through the third outlet hole 35 may be, for example, used for a specific process or simply collected at another device connected to the third outlet hole 35 directly or through another member such as a tube. The remaining component discharged out of the fluidic device 1 through the third outlet hole 35 may be discarded, for example, directly or through another member such as a tube. Note that, as can be seen from the above, the remaining component may not fully exclude at least one of the first particles Pa11 or the second particles Pa12. The remaining component may contain the second particles Pa12 that have not flowed into the multiple branch channels 22 or the first particles Pa11 that have not flowed into the first discharge channel 25.

In one embodiment, the first liquid L1 is introduced into the multiple branch channels 22 using a flow (also referred to as a drawing flow). The drawing flow may facilitate sorting of the multiple first particles Pa11 from the multiple second particles Pa12 using the main channel 21 and the multiple branch channels 22. The drawing flow is indicated by an area Ar1 hatched with diagonal lines from the lower left to the upper right in FIG. 5. The state of the drawing flow indicated by the area Ar1 in FIG. 5 is a mere example. The state of the drawing flow may change based on, for example, the relationship in flow velocity and flow rate between the first liquid L1 introduced from the first introduction channel 23 into the main channel 21 and the second liquid L2 introduced from the second introduction channel 24 into the first upstream portion 21u of the main channel 21. The area Ar1 is adjusted as appropriate to efficiently sort the multiple first particles Pa11 and the multiple second particles Pa12 from the first liquid L1. The second liquid L2 directs the first liquid L1 toward the multiple branch channels 22 in the positive X-direction as the second direction D2 from a position opposite to the multiple branch channels 22. In other words, the second liquid L2 may serve as a liquid that directs, in the main channel 21, the first particles Pa11 and the second particles Pa12 as the multiple types of particles Pa1 toward the first side surface Sw1 of the main channel 21 in the positive X-direction as the second direction D2. The second liquid L2 may facilitate creation of the drawing flow.

In this example, as described above, the main channel 21 extends in the negative Y-direction as the first direction D1. The first connection portion Cp1 of the first introduction channel 23 connected to the first upstream portion 21u of the main channel 21 extends in the negative Y-direction as the first direction D1. Each of the multiple branch channels 22 is open to the first side surface Sw1 of the main channel 21 and is connected to the main channel 21 between the first upstream portion 21u and the first downstream portion 21d of the main channel 21. The second introduction channel 24 is connected to the first upstream portion 21u. The second introduction channel 24 is, for example, open to the second side surface Sw2 of the main channel 21 and is connected to the main channel 21.

In this structure, a liquid flow that directs the multiple types of particles Pa1 toward the multiple branch channels 22 may be created in the main channel 21 when the first liquid L1 containing the multiple types of particles Pa1 is introduced into the main channel 21 from the first introduction channel 23 while the second liquid L2 is introduced into the main channel 21 from the second introduction channel 24. In other words, a liquid flow that directs the multiple types of particles Pa1 toward the multiple branch channels 22 may be created in the main channel 21 when, for example, the first liquid L1 containing the multiple types of particles Pa1 is fed to the main channel 21 through the first inlet hole 31 while the second liquid L2 is fed to the main channel 21 through the second inlet hole 32. In still other words, the multiple first particles Pa11 and the multiple second particles Pa12 as the multiple types of particles Pa1 contained in the first liquid L1 may flow through the main channel 21 toward the first downstream portion 21d while being directed toward the multiple branch channels 22 when, for example, the first liquid L1 is introduced into the first upstream portion 21u from the first inlet hole 31 through the first introduction channel 23 while the second liquid L2 is introduced into the first upstream portion 21u from the second inlet hole 32 through the second introduction channel 24. This allows, for example, the second particles Pa12 with a diameter less than the width of each of the multiple branch channels 22, among the multiple first particles Pa11 and the multiple second particles Pa12 as the multiple types of particles Pa1, to flow easily into the multiple branch channels 22. Thus, among the multiple first particles Pa11 and the multiple second particles Pa12 as the multiple types of particles Pa1 in the first liquid L1, for example, the multiple first particles Pa11 with a diameter greater than the width of each of the multiple branch channels 22 are sorted easily from the multiple second particles Pa12 with a diameter less than the width of each of the multiple branch channels 22.

In one embodiment, as described above, the first discharge channel 25 includes a portion connected to the first downstream portion 21d of the main channel 21, and the portion is open to the side surface of the first downstream portion 21d in the positive X-direction as the second direction D2. This allows, for example, the multiple first particles Pa11 with a diameter greater than the width of each of the multiple branch channels 22 to flow easily into the first discharge channel 25 under the force of the drawing flow in the main channel 21. The multiple first particles Pa11 can thus be discharged easily out of the fluidic device 1 through, for example, the first discharge channel 25 and then through the first outlet hole 33. Thus, among the multiple types of particles Pa1 in the first liquid L1, for example, the multiple first particles Pa11 with a diameter greater than the width of each of the multiple branch channels 22 are sorted easily from the multiple second particles Pa12 with a diameter less than the width of each of the multiple branch channels 22.

In FIG. 5, the drawing flow in the main channel 21 has a width (also referred to as a second width) Wf1 near an area branching from the main channel 21 to the multiple branch channels 22. The width of the drawing flow in the main channel 21 refers to the dimension of the drawing flow in the positive X-direction as the second direction D2. The second width Wf1 may be set by, for example, adjusting the cross-sectional areas and the lengths of the main channel 21 and each of the multiple branch channels 22 and adjusting the flow rates of the first liquid L1 and the second liquid L2.

In the example in FIG. 5, the second width Wf1 is set to allow the area Ar1 of the drawing flow to include the center of gravity of each of the multiple second particles Pa12 and not include the center of gravity of each of the multiple first particles Pa11. With the second width Wf1 being set to allow the area Ar1 of the drawing flow to include the centers of gravity of the second particles Pa12, a force for urging the second particles Pa12 to flow into any of the multiple branch channels 22 is effectively applied to the second particles Pa12 by the drawing flow. The second particles Pa12 can thus flow into the branch channels 22, which have a width greater than the diameter of the second particles Pa12. With the second width Wf1 being set not to allow the area Ar1 of the drawing flow to include the centers of gravity of the first particles Pa11, a force for urging the first particles Pa11 to flow into the multiple branch channels 22 is not fully applied to the first particles Pa11 by the drawing flow. This allows the first particles Pa11 to flow through the main channel 21 without flowing into the multiple branch channels 22 when, for example, the branch channels 22 have a width slightly greater than the diameter of the first particles Pa11.

The first liquid L1 is, for example, blood or blood diluted with saline. Blood is the liquid containing the multiple types of particles Pa1. In this case, for example, the first particles Pa11 are white blood cells, and the second particles Pa12 are red blood cells. The specific process on the multiple first particles Pa11 is, for example, a process of measuring the count or concentration of white blood cells. The remaining component flowing through the third discharge channel 27 and discharged out of the fluidic device 1 through the third outlet hole 35 is, for example, blood plasma. In this case, the second liquid L2 is, for example, saline. More specifically, the second liquid L2 is, for example, phosphate-buffered saline (PBS). To allow the second liquid L2 to function as appropriate for, for example, the use of the fluidic device 1, the second liquid L2 may be PBS with other ingredients added. Examples of the other ingredients may include ethylenediaminetetraacetic acid (EDTA) as a second ingredient and bovine serum albumin (BSA) as a third ingredient. The main channel 21 and the multiple branch channels 22 included in the channel section 2 function as channels for sorting particles in blood. In other words, the channel section 2 includes the main channel 21 and the multiple branch channels 22 for sorting particles in blood.

A red blood cell has the center of gravity at, for example, about 2 to 2.5 micrometers (µm) from its outer rim. A red blood cell has a maximum diameter of, for example, about 6 to 8 µm. A white blood cell has the center of gravity at, for example, about 5 to 10 µm from its outer rim. A white blood cell has a maximum diameter of, for example, about 10 to 20 µm. To sort red blood cells and white blood cells in blood, the width (second width Wf1) of the drawing flow is, for example, about 2 to 10 µm.

The main channel 21 has an area of, for example, about 400 to 4000 square micrometers (µm²) in an imaginary cross section along an XZ plane. The main channel 21 has a dimension (also referred to as a width) of, for example, about 20 to 100 µm in the positive X-direction as the second direction D2. The main channel 21 has a dimension (also referred to as a height) of, for example, about 20 to 100 µm in the positive Z-direction. The main channel 21 has a dimension of, for example, about 0.5 to 20 mm in the negative Y-direction as the first direction D1.

Each of the multiple branch channels 22 has an area of, for example, about 200 to 800 µm² in an imaginary cross section along a YZ plane. Each of the multiple branch channels 22 has a dimension (also referred to as a width) of, for example, about 10 to 30 µm in the negative Y-direction as the first direction D1. Each of the multiple branch channels 22 has a dimension (also referred to as a height) of, for example, about 20 to 100 µm in the positive Z-direction. Each of the multiple branch channels 22 has a dimension of, for example, about 3 to 25 mm in the positive X-direction as the second direction D2.

The flow rate per unit time of a liquid in the main channel 21 is, for example, about 150 to 480 microliters per minute (µL/min). The first liquid L1 is introduced into the main channel 21 from the first inlet hole 31 through the first introduction channel 23 at a flow rate per unit time of, for example, about 90 to 270 µL/m. The second liquid L2 is introduced into the main channel 21 from the second inlet hole 32 through the second introduction channel 24 at a flow rate per unit time of, for example, about 60 to 210 µL/min.

As described above, the main channel 21 extends in, for example, the negative Y-direction as the first direction D1. The first connection portion Cp1 of the first introduction channel 23 connected to the first upstream portion 21u of the main channel 21 extends in the negative Y-direction as the first direction D1. The second connection portion Cp2 of the second introduction channel 24 connected to the first upstream portion 21u of the main channel 21 extends in the third direction D3 forming an acute angle with the negative Y-direction as the first direction D1.

In this structure, during the particle sorting process performed with the fluidic device 1, for example, the second inflow direction of the second liquid L2 may form an acute angle with the first inflow direction of the first liquid L1 in the first upstream portion 21u of the main channel 21 when the second liquid L2 flowing from the second introduction channel 24 to the first upstream portion 21u meets the first liquid L1 flowing from the first introduction channel 23 to the first upstream portion 21u, as illustrated in FIG. 5. The first inflow direction is the direction in which the first liquid L1 flows from the first introduction channel 23 into the first upstream portion 21u of the main channel 21 and is aligned with the negative Y-direction as the first direction D1. The second inflow direction is the direction in which the second liquid L2 flows from the second introduction channel 24 into the first upstream portion 21u of the main channel 21 and is aligned with the third direction D3. This structure can reduce disturbances in the drawing flow in the main channel 21 when, for example, the first liquid L1 is introduced into the main channel 21 at a higher flow velocity. This can reduce the likelihood of an increase in the proportion of the second particle Pa12 (e.g., one or more second particles Pa12) that reaches the first downstream portion 21d among the multiple second particles Pa12 in the first liquid L1. This can thus reduce, for example, the likelihood of an increase in the number of second particles Pa12 mixed in the collection liquid collected from the first downstream portion 21d through, for example, the first outlet hole 33. The proportion of the first particle Pa11 (e.g., multiple first particles Pa11) among multiple particles contained in the collection liquid is thus less likely to decrease. When the first liquid L1 is blood or blood diluted with saline and when the second liquid L2 is saline, for example, the above structure can have less decrease in the proportion of one or more white blood cells (e.g., multiple white blood cells) (also referred to as white blood cell purity) among all blood cells in the collection liquid (also referred to as a white blood cell collection liquid). All blood cells include white blood cells and red blood cells.

As described above, for example, the channel section 2 includes the connection surface Cs1 connecting the third side surface Sw3 of the second connection portion Cp2 and the second side surface Sw2 of the main channel 21. In other words, in the channel section 2, the corner at which the first upstream portion 21u of the main channel 21 and the second connection portion Cp2 of the second introduction channel 24 meet at an acute angle is truncated. In still other words, the channel section 2 includes the portion (expansion portion) Ac1 that is an expanded portion of the channel between the first upstream portion 21u of the main channel 21 and the second connection portion Cp2 of the second introduction channel 24. The first distance Le1 is less than or equal to 1 times the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In this structure, during the particle sorting process performed with the fluidic device 1, for example, the expansion portion Ac1 allows the first liquid L1 flowing in the first upstream portion 21u of the main channel 21 to partly expand toward the second introduction channel 24 and then to be directed toward the first side surface Sw1 by the second liquid L2 as illustrated in FIG. 5. In this case, for example, a part of the first liquid L1 flowing along the second side surface Sw2 and then along the connection surface Cs1 can be directed toward the first side surface Sw1 by a part of the second liquid L2 flowing along the third side surface Sw3. At the liquid junction, this structure allows, for example, the first liquid L1 flowing along the connection surface Cs1 to be urged toward the first side surface Sw1 by a part of the second liquid L2 flowing along the third side surface Sw3, with the urging direction closer to being perpendicular to the direction in which the first liquid L1 flows along the connection surface Cs1. This structure can reduce, for example, disturbances in the drawing flow and allow the second liquid L2 to direct the first liquid L1 toward the multiple branch channels 22 with a stronger force in the main channel 21. This can reduce the proportion of the second particle Pa12 (e.g., one or more second particles Pa12) that reaches the first downstream portion 21d among the multiple second particles Pa12 in the first liquid L1 in the main channel 21. This can thus reduce, for example, the number of second particles Pa12 mixed in the collection liquid collected from the first downstream portion 21d through, for example, the first outlet hole 33. The proportion of the first particle Pa11 (e.g., multiple first particles Pa11) as a particle of a specific type can thus be increased among multiple particles contained in the collection liquid. When the first liquid L1 is blood or blood diluted with saline and when the second liquid L2 is saline, for example, the above structure can increase the white blood cell purity of the white blood cell collection liquid as the collection liquid. As described above, the white blood cell purity refers to the proportion of one or more white blood cells (e.g., multiple white blood cells) among all blood cells.

### 3. Relationship between Dimension of Connection Surface and White Blood Cell Purity

Experiments of the particle sorting process were conducted using the fluidic device 1 according to the above embodiment to examine the relationship between the dimension of the connection surface Cs1 and the white blood cell purity of the white blood cell collection liquid collected from the first downstream portion 21d through, for example, the first outlet hole 33. Various examples of such experiments are described below.

The conditions common to all the examples of the conducted experiments (also referred to as basic conditions) will be described below first. The conditions and results of each of the examples of the conducted experiments will then be described.

### 3-1. Basic Conditions for Experiments

### 3-1-1. Basic Conditions for Fluidic Device

The fluidic device 1 was made of PDMS. The fluidic device 1 was manufactured by bonding the first plate and the second plate together, with one surface of the second plate covering fine protrusions and recesses on one surface of the first plate corresponding to the pattern of the channel section 2. The first plate was a plate-like member including the fine protrusions and recesses on one surface corresponding to the pattern of the channel section 2. The first plate including the fine protrusions and recesses on one surface was formed by resin molding. The second plate was a plate-like member including five through-holes corresponding to the first inlet hole 31, the second inlet hole 32, the first outlet hole 33, the second outlet hole 34, and the third outlet hole 35. The second plate including the five through-holes was formed by resin molding. The first plate and the second plate were bonded together without an adhesive by modifying one surface of the first plate and one surface of the second plate and by placing these surfaces in contact with each other.

Each of multiple channels included in the channel section 2 had a rectangular cross section. The cross section of a channel refers to an imaginary cross section of the channel along an imaginary plane perpendicular to the direction in which the channel extends. The main channel 21 had a width of 40 µm and a height of 40 µm. Each of the multiple branch channels 22 had a width of 18 µm and a height of 40 µm. The multiple branch channels 22 were 90 branch channels. The first introduction channel 23 had a width of 40 µm and a height of 40 µm. The second introduction channel 24 had a width of 40 µm and a height of 40 µm. The connection surface Cs1 was a rectangular flat surface. The expansion portion Ac1 between the first upstream portion 21u of the main channel 21 and the second connection portion Cp2 of the second introduction channel 24 substantially had the shape of an isosceles triangle with its base along the connection surface Cs1 when the channel section 2 was viewed in plan. In other words, the angle α between the third side surface Sw3 and the connection surface Cs1 was equal to the angle β between the second side surface Sw2 and the connection surface Cs1.

### 3-1-2. Basic Conditions for First Liquid and Second Liquid

Blood diluted 1.5-fold with PBS as saline was used as the first liquid L1. The first liquid L1 was fed to the first introduction channel 23 using a syringe pump through the first inlet hole 31 and a tube connected to the first inlet hole 31 from outside the fluidic device 1. The flow rate per unit time of the first liquid L1 introduced into the main channel 21 from the first inlet hole 31 through the first introduction channel 23 was adjusted by controlling the operation of the syringe pump.

PBS as saline was used as the second liquid L2. The second liquid L2 was fed to the second introduction channel 24 using a syringe pump through the second inlet hole 32 and a tube connected to the second inlet hole 32 from outside the fluidic device 1. The flow rate per unit time of the second liquid L2 introduced into the main channel 21 from the second inlet hole 32 through the second introduction channel 24 was adjusted by controlling the operation of the syringe pump.

Immediately before the particle sorting process was performed with the fluidic device 1, the second liquid L2 was introduced into the channel section 2 from the second inlet hole 32 to fill the channel section 2 with the second liquid L2 as an advance preparation.

The white blood cell collection liquid discharged out of the fluidic device 1 through the first outlet hole 33 was collected using an Eppendorf tube through a resin member including channels.

### 3-1-3. Method for Calculating White Blood Cell Purity of White Blood Cell Collection Liquid

The white blood cell purity of the white blood cell collection liquid was calculated based on the concentration of white blood cells (also referred to as a white blood cell concentration) in the white blood cell collection liquid and the concentration of all blood cells (also referred to as a total blood cell concentration) in the white blood cell collection liquid each measured using a measuring device. More specifically, the white blood cell purity (in %) of the white blood cell collection liquid was calculated by dividing the white blood cell concentration by the total blood cell concentration and multiplying the resultant value by 100. As described above, the white blood cell purity refers to the proportion of one or more white blood cells (e.g., multiple white blood cells) among all blood cells.

LUNA FX-7 (registered trademark), or an automated cell counter manufactured by Logos Biosystems, was used as the measuring device.

The measurement of the white blood cell concentration and the total blood cell concentration using the measuring device includes a specimen preparation process, a specimen setting process, and a blood cell concentration measurement process performed sequentially. The specimen preparation process is a process of preparing a sample (also referred to as a specimen) described below. The specimen setting process is a process of setting the specimen described below on the measuring device. The blood cell concentration measurement process is a process of measuring the blood cell concentration described below. A. Specimen Preparation Process

The white blood cell collection liquid collected using the Eppendorf tube was diluted four-fold with PBS to obtain a diluted white blood cell collection liquid (also referred to as a diluted collection liquid). In this example, the volume of each of the white blood cell collection liquid and the PBS was measured using a pipette manually, and the white blood cell collection liquid and the PBS were mixed in the Eppendorf tube manually. More specifically, 15 µL of the white blood cell collection liquid and 5 µL of the PBS were mixed to obtain 20 µL of the diluted collection liquid. After dilution of the white blood cell collection liquid with the PBS, the diluted collection liquid had a blood cell concentration within a range measurable stably and accurately by the measuring device. The range of the blood cell concentration measurable stably and accurately by the measuring device was 1 × 10⁵ to 1 × 10⁷ cells per milliliter (cells/mL).

Then, 18 µL of the diluted collection liquid and 2 µL of a reagent were mixed to prepare a specimen. The reagent was a mixture of acridine orange (AO) and propidium iodide (PI). More specifically, the reagent was AO/PI stain manufactured by Logos Biosystems. In this example, the volume of each of the diluted collection liquid and the reagent was measured using a pipette manually, and the diluted collection liquid and the reagent were mixed in an Eppendorf tube manually. The diluted collection liquid and the reagent were mixed in the Eppendorf tube by shaking the Eppendorf tube at room temperature.

AO is a dye (also referred to as a nuclear staining dye) that penetrates the cell membranes of both living cells and dead cells to stain all nucleated cells and emits green fluorescence. PI is a dye (also referred to as a dead cell staining dye) that penetrates nucleated cells having damaged cell membranes to stain dead cells and emits red fluorescence. When multiple cells are stained with both AO and PI, all living cells having nuclei among the multiple cells emit green fluorescence, and all dead cells having nuclei among the multiple cells emit red fluorescence. In other words, when multiple white blood cells are stained with both AO and PI, all living white blood cells among the multiple white blood cells emit green fluorescence, and all dead white blood cells among the multiple white blood cells emit red fluorescence. In contrast, cells without nuclei such as red blood cells, platelets, and fragments of a human (also referred to as anucleate cells) do not emit fluorescence with AO or PI.

### B. Specimen Setting Process

Ten microliters of the specimen obtained in the specimen preparation process was injected into a cell count slide using a pipette.

The cell count slide was then placed into a slide slot on a side of LUNA FX-7 (registered trademark), or an automated cell counter manufactured by Logos Biosystems, as the measuring device. The specimen was thus set on the measuring device.

### C. Blood Cell Concentration Measurement Process

The measuring device on which the specimen was set in the specimen setting process was operated to measure the white blood cell concentration and the total blood cell concentration sequentially for the specimen in the measuring device at room temperature.

To measure the white blood cell concentration, the measuring device illuminated the specimen in the cell count slide with excitation light having a predetermined wavelength to cause white blood cells to emit fluorescence. During the emission, the measuring device obtained multiple images of 8 to 12 portions of the specimen. The measuring device performed image processing on each of the multiple images and counted white blood cells to obtain the average of the white blood cell concentrations of these images. The measuring device output the average as the measurement value of the white blood cell concentration (in cells/mL). The white blood cell concentration refers to the concentration of white blood cells including both living and dead white blood cells. In this example, the measuring device illuminated, in a darkroom, the specimen in the cell count slide with excitation light having a wavelength of 450 to 490 nanometers (nm), causing white blood cells to emit green fluorescence having a wavelength of 505 to 555 nm. During the emission, the measuring device obtained multiple images of 8 to 12 portions of the specimen. The measuring device then performed image processing on each of the multiple images and counted white blood cells. The measuring device also illuminated, in the darkroom, the specimen in the cell count slide with excitation light having a wavelength of 510 to 550 nm, causing dead white blood cells to emit red fluorescence having a wavelength of 590 to 650 nm. During the emission, the measuring device obtained multiple images of 8 to 12 portions of the specimen. The measuring device then performed image processing on each of the multiple images and counted dead white blood cells.

To measure the total blood cell concentration, the measuring device obtained multiple images of 8 to 12 portions of the specimen in the cell count slide in a bright field. The measuring device performed image processing on each of the multiple images and counted blood cells to obtain the average of the blood cell concentrations of these images. The measuring device output the average as the measurement value of the total blood cell concentration (in cells/mL).

### 3-2. First Example Experiment

In the first example experiment, as illustrated in FIG. 4, the angle θ between the first direction D1 and the third direction D3 was 30 degrees. In other words, the angle θ was 30 degrees between the first direction D1, in which each of the first connection portion Cp1 of the first introduction channel 23 and the main channel 21 extends, and the third direction D3, in which the second connection portion Cp2 of the second introduction channel 24 extends.

In the first example experiment, during the particle sorting process performed with the fluidic device 1, the first liquid L1 was introduced into the main channel 21 from the first inlet hole 31 through the first introduction channel 23 at a flow rate per unit time of 150 µL/min, and the second liquid L2 was introduced into the main channel 21 from the second inlet hole 32 through the second introduction channel 24 at a flow rate per unit time of 120 µL/min.

In the first example experiment, the first distance Le1 as the dimension of the connection surface Cs1 was set to six distances, or specifically, distances that are 0, 0.5, 1, 2, 3, and 5 times the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1. In one or more embodiments of the present disclosure, a structure with the first distance Le1 being 0 times the first width W1 refers to a structure in which the second side surface Sw2 of the main channel 21 and the third side surface Sw3 of the second connection portion Cp2 are directly connected to each other with no connection surface Cs1. In other words, a fluidic device (also referred to as a fluidic device in a reference example) in which the second side surface Sw2 of the main channel 21 and the third side surface Sw3 of the second connection portion Cp2 are directly connected to each other with no connection surface Cs1 was used as a fluidic device with the first distance Le1 being 0 times the first width W1. Such a fluidic device forms the basis of the fluidic device 1.

In the first example experiment, fluidic devices with six conditions were each used to perform the particle sorting process and calculate the white blood cell purity of the white blood cell collection liquid. In this example, the fluidic devices with the six conditions were a fluidic device including no connection surface Cs1, a fluidic device with the first distance Le1 being 0.5 times the first width W1, a fluidic device with the first distance Le1 being 1 times the first width W1, a fluidic device with the first distance Le1 being 2 times the first width W1, a fluidic device with the first distance Le1 being 3 times the first width W1, and a fluidic device with the first distance Le1 being 5 times the first width W1.

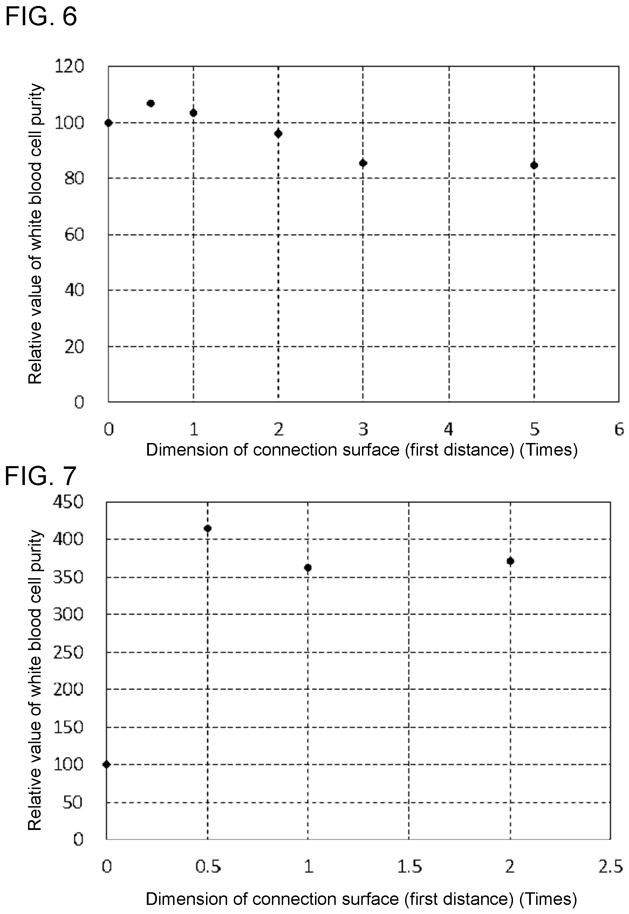

FIG. 6 is a graph showing the relationship between the dimension of the connection surface Cs1 and the white blood cell purity of the white blood cell collection liquid based on the results of the first example experiment. In FIG. 6, the relationship between the dimension of the connection surface Cs1 and the white blood cell purity of the white blood cell collection liquid is plotted with multiple solid circles. In FIG. 6, the horizontal axis indicates the ratio of the first distance Le1 to the width (first width) W1 of the main channel 21 as the dimension of the connection surface Cs1. In other words, the horizontal axis indicates the value of the first distance Le1 relative to the width (first width) W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (also referred to as the relative value of the white blood cell purity). The relative value of the white blood cell purity of the white blood cell collection liquid is obtained by dividing the white blood cell purity by the white blood cell purity of the white blood cell collection liquid calculated for the fluidic device including no connection surface Cs1 (also referred to as a reference value of the white blood cell purity) and multiplying the resultant value by 100.

In the first example experiment, as shown in FIG. 6, the white blood cell purity of the white blood cell collection liquid was higher for the device with the first distance Le1 corresponding to the dimension of the connection surface Cs1 being any of 1 or 0.5 times the first width W1 than for the device including no connection surface Cs1.

Thus, the first example experiment reveals that the white blood cell purity of the white blood cell collection liquid can be higher for a device including the connection surface Cs1 with the first distance Le1 corresponding to the dimension of the connection surface Cs1 being less than or equal to 1 times the width (first width) W1 of the main channel 21 than for a device including no connection surface Cs1.

In the first example experiment, as shown in FIG. 6, the white blood cell purity of the white blood cell collection liquid was higher for the device with the first distance Le1 corresponding to the dimension of the connection surface Cs1 being 0.5 times the first width W1 than for the device with the first distance Le1 corresponding to the dimension of the connection surface Cs1 being 1 times the first width W1.

### 3-3. Second Example Experiment

In the second example experiment, as illustrated in FIG. 4, the angle θ between the first direction D1 and the third direction D3 was 30 degrees, as in the first example experiment described above.

In the second example experiment, during the particle sorting process performed with the fluidic device 1, the first liquid L1 was introduced into the main channel 21 from the first inlet hole 31 through the first introduction channel 23 at a flow rate per unit time of 150 µL/min, and the second liquid L2 was introduced into the main channel 21 from the second inlet hole 32 through the second introduction channel 24 at a flow rate per unit time of 90 µL/min. In other words, in the second example experiment, the second liquid L2 was introduced into the main channel 21 from the second inlet hole 32 through the second introduction channel 24 at a flow rate per unit time of 90 µL/min, which was lower than 120 µL/min in the first example experiment described above.

In the second example experiment, the first distance Le1 as the dimension of the connection surface Cs1 was set to four distances, or specifically, distances that are 0, 0.5, 1, and 2 times the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In the second example experiment, fluidic devices with four conditions were each used to perform the particle sorting process and calculate the white blood cell purity of the white blood cell collection liquid. In this example, the fluidic devices with the four conditions were a fluidic device including no connection surface Cs1, a fluidic device with the first distance Le1 being 0.5 times the first width W1, a fluidic device with the first distance Le1 being 1 times the first width W1, and a fluidic device with the first distance Le1 being 2 times the first width W1.

FIG. 7 is a graph showing the relationship between the dimension of the connection surface Cs1 and the white blood cell purity of the white blood cell collection liquid based on the results of the second example experiment. In FIG. 7, the relationship between the dimension of the connection surface Cs1 and the white blood cell purity of the white blood cell collection liquid is plotted with multiple solid circles, as in FIG. 6. In FIG. 7, the horizontal axis indicates the ratio of the first distance Le1 to the width (first width) W1 of the main channel 21 as the dimension of the connection surface Cs1, as in FIG. 6. In other words, the horizontal axis indicates the value of the first distance Le1 relative to the first width W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (the relative value of the white blood cell purity).

In the second example experiment, as shown in FIG. 7, the white blood cell purity of the white blood cell collection liquid was higher for the device with the first distance Le1 corresponding to the dimension of the connection surface Cs1 being any of 1 or 0.5 times the first width W1 than for the device including no connection surface Cs1, as in the first example experiment described above.

Thus, the second example experiment reveals that the white blood cell purity of the white blood cell collection liquid can be higher for a device including the connection surface Cs1 with the first distance Le1 being less than or equal to 1 times the width (first width) W1 of the main channel 21 than for a device including no connection surface Cs1, as in the first example experiment described above.

In the second example experiment, as shown in FIG. 7, the white blood cell purity of the white blood cell collection liquid was higher for the device with the first distance Le1 corresponding to the dimension of the connection surface Cs1 being 0.5 times the first width W1 than for the device with the first distance Le1 corresponding to the dimension of the connection surface Cs1 being 1 times the first width W1, as in the first example experiment described above.

### 3-4. Third Example Experiment

In the third example experiment, as illustrated in FIG. 4, the angle θ between the first direction D1 and the third direction D3 was 30 degrees, as in the first example experiment and the second example experiment described above.

In the third example experiment, during the particle sorting process performed with the fluidic device 1, the first liquid L1 was introduced into the main channel 21 from the first inlet hole 31 through the first introduction channel 23 at a flow rate per unit time of 180 µL/min, and the second liquid L2 was introduced into the main channel 21 from the second inlet hole 32 through the second introduction channel 24 at a flow rate per unit time of 120 µL/min. In other words, in the third example experiment, the first liquid L1 was introduced into the main channel 21 from the first inlet hole 31 through the first introduction channel 23 at a flow rate per unit time of 180 µL/min, which was higher than 150 µL/min in the first example experiment described above.

In the third example experiment, the first distance Le1 as the dimension of the connection surface Cs1 was set to four distances, or specifically, distances that are 0, 0.5, 1, and 2 times the width (first width) W1 of the main channel 21, as in the second example experiment described above. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In the second example experiment, fluidic devices with four conditions were each used to perform the particle sorting process and calculate the white blood cell purity of the white blood cell collection liquid. In this example, the fluidic devices with the four conditions were a fluidic device including no connection surface Cs1, a fluidic device with the first distance Le1 being 0.5 times the first width W1, a fluidic device with the first distance Le1 being 1 times the first width W1, and a fluidic device with the first distance Le1 being 2 times the first width W1.

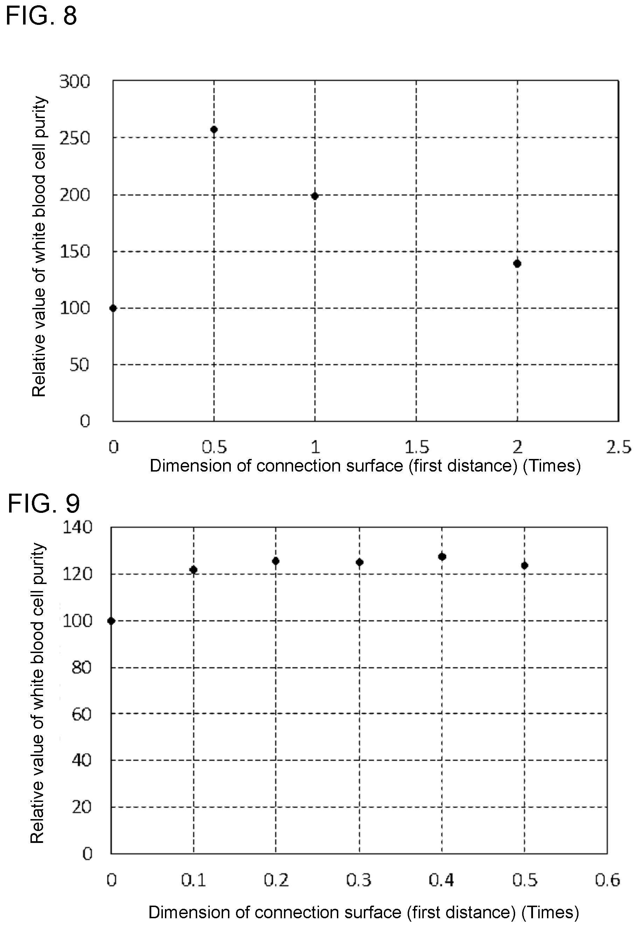

FIG. 8 is a graph showing the relationship between the dimension of the connection surface Cs1 and the white blood cell purity of the white blood cell collection liquid based on the results of the third example experiment. In FIG. 8, the relationship between the dimension of the connection surface Cs1 and the white blood cell purity of the white blood cell collection liquid is plotted with multiple solid circles, as in FIGs. 6 and 7. In FIG. 8, the horizontal axis indicates the ratio of the first distance Le1 to the width (first width) W1 of the main channel 21 as the dimension of the connection surface Cs1, as in FIGs. 6 and 7. In other words, the horizontal axis indicates the value of the first distance Le1 relative to the width (first width) W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (the relative value of the white blood cell purity).

In the third example experiment, as shown in FIG. 8, the white blood cell purity of the white blood cell collection liquid was higher for the device with the first distance Le1 corresponding to the dimension of the connection surface Cs1 being any of 1 or 0.5 times the first width W1 than for the device including no connection surface Cs1, as in the first example experiment and the second example experiment described above.

Thus, the third example experiment reveals that the white blood cell purity of the white blood cell collection liquid can be higher for a device including the connection surface Cs1 with the first distance Le1 being less than or equal to 1 times the width (first width) W1 of the main channel 21 than for a device including no connection surface Cs1, as in the first example experiment and the second example experiment described above.

In the third example experiment, as shown in FIG. 8, the white blood cell purity of the white blood cell collection liquid was higher for the device with the first distance Le1 corresponding to the dimension of the connection surface Cs1 being 0.5 times the first width W1 than for the device with the first distance Le1 corresponding to the dimension of the connection surface Cs1 being 1 times the first width W1, as in the first example experiment and the second example experiment described above.

### 3-5. Results of First to Third Example Experiments

In all the first to third example experiments described above, as shown in FIGs. 6 to 8, the white blood cell purity of the white blood cell collection liquid was higher for the device with the first distance Le1 corresponding to the dimension of the connection surface Cs1 being any of 1 or 0.5 times the first width W1 than for the device including no connection surface Cs1. In other words, during the particle sorting process performed with the fluidic device 1, the white blood cell purity of the white blood cell collection liquid was higher for the device with the first distance Le1 corresponding to the dimension of the connection surface Cs1 being any of 1 or 0.5 times the first width W1 than for the device including no connection surface Cs1, with slight increase or decrease in the flow rate per unit time of the first liquid L1 introduced into the main channel 21 from the first inlet hole 31 through the first introduction channel 23 or the second liquid L2 introduced into the main channel 21 from the second inlet hole 32 through the second introduction channel 24.

Thus, the example experiments reveal that the white blood cell purity of the white blood cell collection liquid can be higher for a device including the connection surface Cs1 with the first distance Le1 being less than or equal to 1 times the width (first width) W1 of the main channel 21 than for a device including no connection surface Cs1. In other words, the example experiments reveal that the proportion of one or more particles of a specific type (e.g., multiple particles of a specific type) among multiple particles contained in the collection liquid can be increased for a device including the connection surface Cs1 with the first distance Le1 being less than or equal to 1 times the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

### 3-6. Fourth Example Experiment

In the fourth example experiment, as illustrated in FIG. 4, the angle θ between the first direction D1 and the third direction D3 was 30 degrees, as in the first example experiment described above.

In the fourth example experiment, during the particle sorting process performed with the fluidic device 1, the first liquid L1 was introduced into the main channel 21 from the first inlet hole 31 through the first introduction channel 23 at a flow rate per unit time of 150 µL/min, and the second liquid L2 was introduced into the main channel 21 from the second inlet hole 32 through the second introduction channel 24 at a flow rate per unit time of 120 µL/min, as in the first example experiment described above.

In the fourth example experiment, the first distance Le1 as the dimension of the connection surface Cs1 was set to six distances, or specifically, distances that are 0, 0.1, 0.2, 0.3, 0.4, and 0.5 times the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In the fourth example experiment, fluidic devices with six conditions were each used to perform the particle sorting process and calculate the white blood cell purity of the white blood cell collection liquid. In this example, the fluidic devices with the six conditions were a fluidic device including no connection surface Cs1, a fluidic device with the first distance Le1 being 0.1 times the first width W1, a fluidic device with the first distance Le1 being 0.2 times the first width W1, a fluidic device with the first distance Le1 being 0.3 times the first width W1, a fluidic device with the first distance Le1 being 0.4 times the first width W1, and a fluidic device with the first distance Le1 being 0.5 times the first width W1.

FIG. 9 is a graph showing the relationship between the dimension of the connection surface Cs1 and the white blood cell purity of the white blood cell collection liquid based on the results of the fourth example experiment. In FIG. 9, the relationship between the dimension of the connection surface Cs1 and the white blood cell purity of the white blood cell collection liquid is plotted with multiple solid circles, as in FIGs. 6 to 8. In FIG. 9, the horizontal axis indicates the ratio of the first distance Le1 to the width (first width) W1 of the main channel 21 as the dimension of the connection surface Cs1, as in FIGs. 6 to 8. In other words, the horizontal axis indicates the value of the first distance Le1 relative to the width (first width) W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (the relative value of the white blood cell purity).

In the fourth example experiment, as shown in FIG. 9, the white blood cell purity of the white blood cell collection liquid was consistently higher for the device with the first distance Le1 corresponding to the dimension of the connection surface Cs1 being any of 0.1, 0.2, 0.3, 0.4, or 0.5 times the first width W1 than for the device including no connection surface Cs1.

Thus, the fourth example experiment reveals that the white blood cell purity of the white blood cell collection liquid can be consistently higher for a device including the connection surface Cs1 with the first distance Le1 being 0.1 to 0.5 times inclusive the width (first width) W1 of the main channel 21 than for a device including no connection surface Cs1.

In the fourth example experiment, as shown in FIG. 9, the white blood cell purity of the white blood cell collection liquid was the highest for the device with the first distance Le1 corresponding to the dimension of the connection surface Cs1 being 0.4 times the first width W1 among 0.1 to 0.5 times. In other words, the white blood cell purity of the white blood cell collection liquid showed an increasing trend as the first distance Le1 corresponding to the dimension of the connection surface Cs1 increased from 0.1 to 0.4 times the first width W1, and showed a decreasing trend as the first distance Le1 corresponding to the dimension of the connection surface Cs1 increased from 0.4 to 0.5 times the first width W1. In the fourth example experiment, the white blood cell purity of the white blood cell collection liquid had a maximum value of about 88% for the device with the first distance Le1 corresponding to the dimension of the connection surface Cs1 being 0.4 times the first width W1.

### 3-7. Fifth Example Experiment

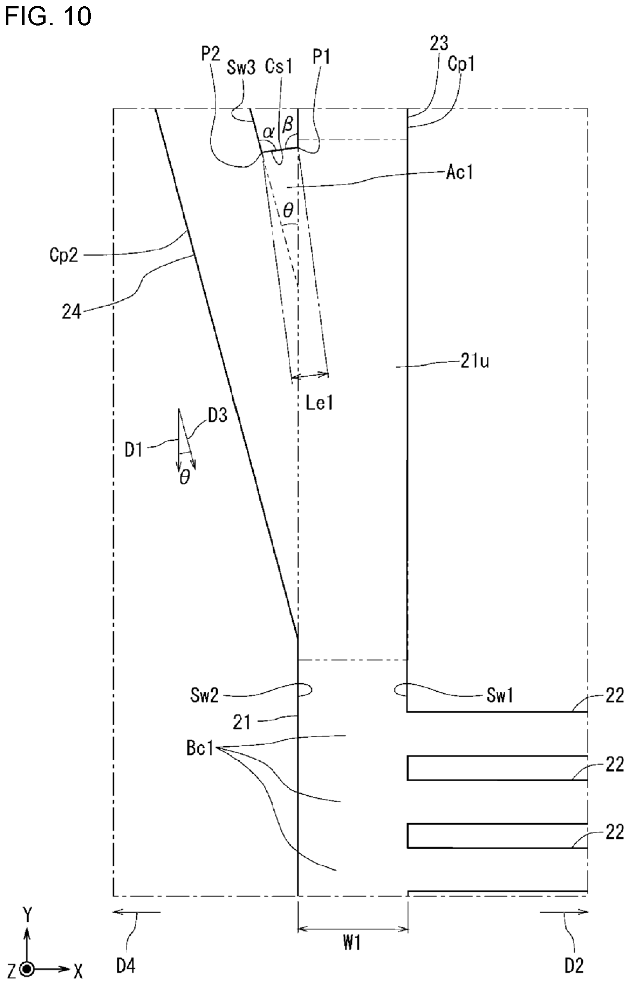

FIG. 10 is a schematic partial plan view of the channel section 2 in the fluidic device 1 used in the fifth example experiment. More specifically, FIG. 10 is a schematic plan view of the channel section 2 in the fluidic device 1 used in the fifth example experiment, illustrating the area corresponding to the area IV defined by the rectangular dot-dash line in FIG. 3. In FIG. 10, the outer edge of the channel section 2 is drawn with a solid line, as in FIGs. 3 and 4.

In the fifth example experiment, as illustrated in FIG. 10, the angle θ between the first direction D1 and the third direction D3 was 15 degrees. In other words, the angle θ was 15 degrees between the first direction D1, in which each of the first connection portion Cp1 of the first introduction channel 23 and the main channel 21 extends, and the third direction D3, in which the second connection portion Cp2 of the second introduction channel 24 extends. In still other words, the angle θ was 15 degrees in the fifth example experiment, which was less than 30 degrees in the fourth example experiment described above.

In the fifth example experiment, during the particle sorting process performed with the fluidic device 1, the first liquid L1 was introduced into the main channel 21 from the first inlet hole 31 through the first introduction channel 23 at a flow rate per unit time of 150 µL/min, and the second liquid L2 was introduced into the main channel 21 from the second inlet hole 32 through the second introduction channel 24 at a flow rate per unit time of 120 µL/min, as in the fourth example experiment described above.

In the fifth example experiment, the first distance Le1 as the dimension of the connection surface Cs1 was set to six distances, or specifically, distances that are 0, 0.1, 0.2, 0.3, 0.4, and 0.5 times the width (first width) W1 of the main channel 21, as in the fourth example experiment described above. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In the fifth example experiment, fluidic devices with six conditions were each used to perform the particle sorting process and calculate the white blood cell purity of the white blood cell collection liquid, as in the fourth example experiment described above. In this example, the fluidic devices with the six conditions were a fluidic device including no connection surface Cs1, a fluidic device with the first distance Le1 being 0.1 times the first width W1, a fluidic device with the first distance Le1 being 0.2 times the first width W1, a fluidic device with the first distance Le1 being 0.3 times the first width W1, a fluidic device with the first distance Le1 being 0.4 times the first width W1, and a fluidic device with the first distance Le1 being 0.5 times the first width W1.

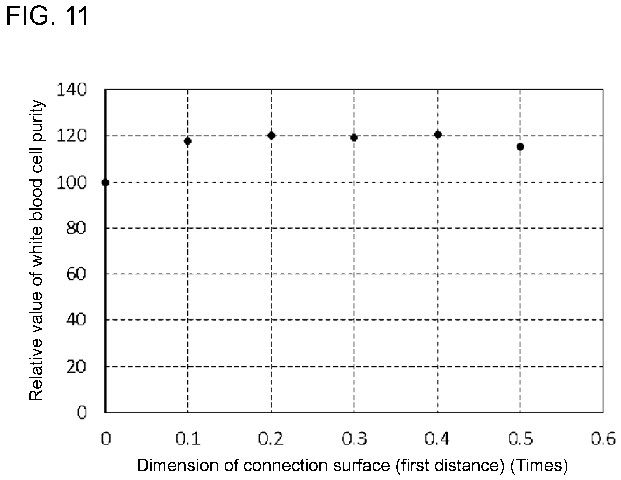

FIG. 11 is a graph showing the relationship between the dimension of the connection surface Cs1 and the white blood cell purity of the white blood cell collection liquid based on the results of the fifth example experiment. In FIG. 11, the relationship between the dimension of the connection surface Cs1 and the white blood cell purity of the white blood cell collection liquid is plotted with multiple solid circles, as in FIG. 9. In FIG. 11, the horizontal axis indicates the ratio of the first distance Le1 to the width (first width) W1 of the main channel 21 as the dimension of the connection surface Cs1, as in FIG. 9. In other words, the horizontal axis indicates the value of the first distance Le1 relative to the width (first width) W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (the relative value of the white blood cell purity).

In the fifth example experiment, as shown in FIG. 11, the white blood cell purity of the white blood cell collection liquid was consistently higher for the device with the first distance Le1 corresponding to the dimension of the connection surface Cs1 being any of 0.1, 0.2, 0.3, 0.4, or 0.5 times the first width W1 than for the device including no connection surface Cs1, as in the fourth example experiment described above.

Thus, the fifth example experiment reveals that the white blood cell purity of the white blood cell collection liquid can be consistently higher for a device including the connection surface Cs1 with the first distance Le1 being 0.1 to 0.5 times inclusive the width (first width) W1 of the main channel 21 than for a device including no connection surface Cs1, as in the fourth example experiment described above.

In the fifth example experiment, as shown in FIG. 11, the white blood cell purity of the white blood cell collection liquid was the highest for the device with the first distance Le1 corresponding to the dimension of the connection surface Cs1 being 0.4 times the first width W1 among 0.1 to 0.5 times, as in the fourth example experiment described above. In other words, the white blood cell purity of the white blood cell collection liquid showed an increasing trend as the first distance Le1 corresponding to the dimension of the connection surface Cs1 increased from 0.1 to 0.4 times the first width W1, and showed a decreasing trend as the first distance Le1 corresponding to the dimension of the connection surface Cs1 increased from 0.4 to 0.5 times the first width W1. In the fifth example experiment, the white blood cell purity of the white blood cell collection liquid had a maximum value of about 69% for the device with the first distance Le1 corresponding to the dimension of the connection surface Cs1 being 0.4 times the first width W1.

### 3-8. Sixth Example Experiment

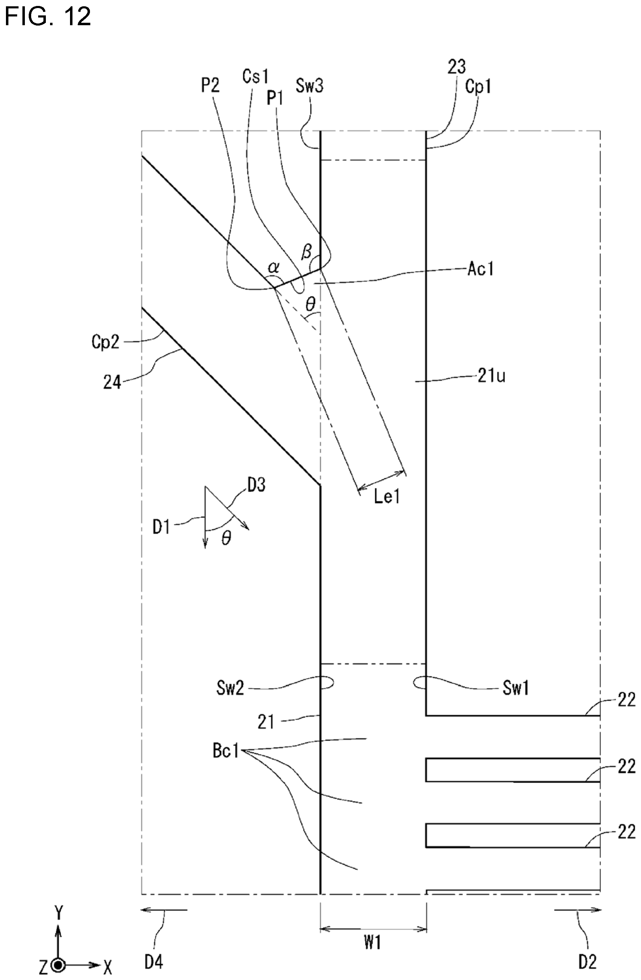

FIG. 12 is a schematic partial plan view of the channel section 2 in the fluidic device 1 used in the sixth example experiment. More specifically, FIG. 12 is a schematic plan view of the channel section 2 in the fluidic device 1 used in the sixth example experiment, illustrating the area corresponding to the area IV defined by the rectangular dot-dash line in FIG. 3. In FIG. 12, the outer edge of the channel section 2 is drawn with a solid line, as in FIGs. 3, 4, and 10.

In the sixth example experiment, as illustrated in FIG. 12, the angle θ between the first direction D1 and the third direction D3 was 45 degrees. In other words, the angle θ was 45 degrees between the first direction D1, in which each of the first connection portion Cp1 of the first introduction channel 23 and the main channel 21 extends, and the third direction D3, in which the second connection portion Cp2 of the second introduction channel 24 extends. In still other words, the angle θ was 45 degrees in the sixth example experiment, which was greater than 30 degrees in the fourth example experiment described above.

In the sixth example experiment, during the particle sorting process performed with the fluidic device 1, the first liquid L1 was introduced into the main channel 21 from the first inlet hole 31 through the first introduction channel 23 at a flow rate per unit time of 150 µL/min, and the second liquid L2 was introduced into the main channel 21 from the second inlet hole 32 through the second introduction channel 24 at a flow rate per unit time of 120 µL/min, as in the fourth example experiment and the fifth example experiment described above.

In the sixth example experiment, the first distance Le1 as the dimension of the connection surface Cs1 was set to six distances, or specifically, distances that are 0, 0.1, 0.2, 0.3, 0.4, and 0.5 times the width (first width) W1 of the main channel 21, as in the fourth example experiment and the fifth example experiment described above. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In the sixth example experiment, fluidic devices with six conditions were each used to perform the particle sorting process and calculate the white blood cell purity of the white blood cell collection liquid, as in the fourth example experiment and the fifth example experiment described above. In this example, the fluidic devices with the six conditions were a fluidic device including no connection surface Cs1, a fluidic device with the first distance Le1 being 0.1 times the first width W1, a fluidic device with the first distance Le1 being 0.2 times the first width W1, a fluidic device with the first distance Le1 being 0.3 times the first width W1, a fluidic device with the first distance Le1 being 0.4 times the first width W1, and a fluidic device with the first distance Le1 being 0.5 times the first width W1.

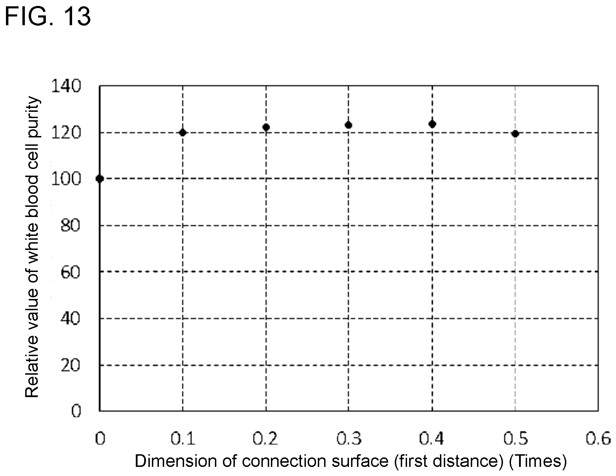

FIG. 13 is a graph showing the relationship between the dimension of the connection surface Cs1 and the white blood cell purity of the white blood cell collection liquid based on the results of the sixth example experiment. In FIG. 13, the relationship between the dimension of the connection surface Cs1 and the white blood cell purity of the white blood cell collection liquid is plotted with multiple solid circles, as in FIGs. 9 and 11. In FIG. 13, the horizontal axis indicates the ratio of the first distance Le1 to the width (first width) W1 of the main channel 21 as the dimension of the connection surface Cs1, as in FIGs. 9 and 11. In other words, the horizontal axis indicates the value of the first distance Le1 relative to the width (first width) W1 of the main channel 21 defined as 1. The vertical axis indicates the value of the white blood cell purity of the white blood cell collection liquid relative to the white blood cell purity of the white blood cell collection liquid calculated for the fluidic device including no connection surface Cs1 defined as 100 (the relative value of the white blood cell purity).

In the sixth example experiment, as shown in FIG. 13, the white blood cell purity of the white blood cell collection liquid was consistently higher for the device with the first distance Le1 corresponding to the dimension of the connection surface Cs1 being any of 0.1, 0.2, 0.3, 0.4, or 0.5 times the first width W1 than for the device including no connection surface Cs1, as in the fourth example experiment and the fifth example experiment described above.

Thus, the sixth example experiment reveals that the white blood cell purity of the white blood cell collection liquid can be consistently higher for a device including the connection surface Cs1 with the first distance Le1 being 0.1 to 0.5 times inclusive the width (first width) W1 of the main channel 21 than for a device including no connection surface Cs1, as in the fourth example experiment and the fifth example experiment described above.

In the sixth example experiment, as shown in FIG. 13, the white blood cell purity of the white blood cell collection liquid was the highest for the device with the first distance Le1 corresponding to the dimension of the connection surface Cs1 being 0.4 times the first width W1 among 0.1 to 0.5 times, as in the fourth example experiment and the fifth example experiment described above. In other words, the white blood cell purity of the white blood cell collection liquid showed an increasing trend as the first distance Le1 corresponding to the dimension of the connection surface Cs1 increased from 0.1 to 0.4 times the first width W1, and showed a decreasing trend as the first distance Le1 corresponding to the dimension of the connection surface Cs1 increased from 0.4 to 0.5 times the first width W1. In the sixth example experiment, the white blood cell purity of the white blood cell collection liquid had a maximum value of about 75% for the device with the first distance Le1 corresponding to the dimension of the connection surface Cs1 being 0.4 times the first width W1.

### 3-9. Results of Fourth to Sixth Example Experiments

In all the fourth to sixth example experiments described above, as shown in FIGs. 9, 11, and 13, the white blood cell purity of the white blood cell collection liquid was consistently higher for the device with the first distance Le1 corresponding to the dimension of the connection surface Cs1 being any of 0.1, 0.2, 0.3, 0.4, or 0.5 times the first width W1 than for the device including no connection surface Cs1. In other words, with the angle θ between the first direction D1 and the third direction D3 being any of 15 to 45 degrees, the white blood cell purity of the white blood cell collection liquid was consistently higher for the device with the first distance Le1 corresponding to the dimension of the connection surface Cs1 being any of 0.1, 0.2, 0.3, 0.4, or 0.5 times the first width W1 than for the device including no connection surface Cs1.

Thus, the example experiments reveal that the white blood cell purity of the white blood cell collection liquid can be consistently higher for a device including the connection surface Cs1 with the first distance Le1 being 0.1 to 0.5 times inclusive the width (first width) W1 of the main channel 21 than for a device including no connection surface Cs1. In other words, the example experiments reveal that the proportion of one or more particles of a specific type (e.g., multiple particles of a specific type) among multiple particles contained in the collection liquid can be increased for a device including the connection surface Cs1 with the first distance Le1 being 0.1 to 0.5 times inclusive the width (first width) W1 of the main channel 21. As described above, the first distance Le1 refers to the distance between the third portion P1, which connects the second side surface Sw2 of the main channel 21 with the connection surface Cs1, and the fourth portion P2, which connects the third side surface Sw3 of the second connection portion Cp2 with the connection surface Cs1.

In other words, the example experiments reveal that the white blood cell purity of the white blood cell collection liquid can be consistently higher for a device including the connection surface Cs1 with the angle θ being 15 to 45 degrees inclusive between the first direction D1, in which each of the first connection portion Cp1 of the first introduction channel 23 and the main channel 21 extends, and the third direction D3, in which the second connection portion Cp2 of the second introduction channel 24 extends, than for a device including no connection surface Cs1. In still other words, the example experiments reveal that the proportion of one or more particles of a specific type (e.g., multiple particles of a specific type) among multiple particles contained in the collection liquid can be consistently increased for a device including the connection surface Cs1 with the angle θ being 15 to 45 degrees inclusive between the first direction D1, in which each of the first connection portion Cp1 of the first introduction channel 23 and the main channel 21 extends, and the third direction D3, in which the second connection portion Cp2 of the second introduction channel 24 extends.

As described above, the white blood cell purity of the white blood cell collection liquid had a maximum value of about 88% in the fourth example experiment with the angle θ being 30 degrees. In the fifth example experiment with the angle θ being 15 degrees, the white blood cell purity of the white blood cell collection liquid had a maximum value of about 69%. In the sixth example experiment with the angle θ being 45 degrees, the white blood cell purity of the white blood cell collection liquid had a maximum value of about 75%. Thus, the example experiments reveal that the white blood cell purity of the white blood cell collection liquid can be still higher for a device including the connection surface Cs1 with the angle θ being 30 degrees between the first direction D1, in which each of the first connection portion Cp1 of the first introduction channel 23 and the main channel 21 extends, and the third direction D3, in which the second connection portion Cp2 of the second introduction channel 24 extends, than for a device including no connection surface Cs1. In other words, the example experiments reveal that the proportion of one or more particles of a specific type (e.g., multiple particles of a specific type) among multiple particles contained in the collection liquid can be further increased for a device including the connection surface Cs1 with the angle θ being 30 degrees between the first direction D1, in which each of the first connection portion Cp1 of the first introduction channel 23 and the main channel 21 extends, and the third direction D3, in which the second connection portion Cp2 of the second introduction channel 24 extends.

### 4. Overview of Embodiment

In one embodiment, the fluidic device 1 includes the main channel 21 extending in the first direction D1 and including the first upstream portion 21u and the first downstream portion 21d. Each of the multiple branch channels 22 narrower than the main channel 21 is open to the first side surface Sw1 between the first downstream portion 21d and the first upstream portion 21u and is connected to the main channel 21. The first connection portion Cp1 of the first introduction channel 23 connected to the first upstream portion 21u extends in the first direction D1. The second connection portion Cp2 of the second introduction channel 24 connected to the first upstream portion 21u extends in the third direction D3. The first direction D1 and the third direction D3 form an acute angle. The channel section 2 includes the connection surface Cs1 connecting the second side surface Sw2 of the main channel 21 and the third side surface Sw3 of the second connection portion Cp2 located adjacent to the first connection portion Cp1. The distance (first distance) Le1 between the third portion P1, which connects the second side surface Sw2 of the main channel 21 with the connection surface Cs1, and the fourth portion P2, which connects the third side surface Sw3 of the second connection portion Cp2 with the connection surface Cs1, is less than or equal to 1 times the width (first width) W1 of the main channel 21.

The fluidic device 1 with this structure can reduce, for example, disturbances in the drawing flow and allow the second liquid L2 to direct the first liquid L1 toward the multiple branch channels 22 with a stronger force in the main channel 21 while the first liquid L1 is introduced into the first upstream portion 21u of the main channel 21 from the first introduction channel 23 and the second liquid L2 is introduced into the first upstream portion 21u of the main channel 21 from the second introduction channel 24 during the particle sorting process. This can reduce the proportion of the second particle Pa12 (e.g., one or more second particles Pa12) that reaches the first downstream portion 21d among the multiple second particles Pa12 in the first liquid L1. This can thus reduce, for example, the number of second particles Pa12 mixed in the collection liquid collected from the first downstream portion 21d through, for example, the first outlet hole 33. The proportion of the first particle Pa11 (e.g., multiple first particles Pa11) as a particle of a specific type can thus be increased among multiple particles contained in the collection liquid. When the first liquid L1 is blood or blood diluted with saline and when the second liquid L2 is saline, for example, the above structure can increase the white blood cell purity defined as the proportion of one or more white blood cells (e.g., multiple white blood cells) among all blood cells in the white blood cell collection liquid as the collection liquid.

### 5. Other Embodiments

The present disclosure is not limited to the embodiment described above, and may be changed or varied in various manners without departing from the spirit and scope of the present disclosure.

In the above embodiment, the connection surface Cs1 is, for example, a flat surface, but is not limited to this example. For example, the connection surface Cs1 may be slightly curved or may include a slightly non-flat portion. For example, the portion of the connection surface Cs1 connected to the second side surface Sw2 of the main channel 21 may form an angular corner with the second side surface Sw2, or may form a rounded corner with the second side surface Sw2. For example, the portion of the connection surface Cs1 connected to the third side surface Sw3 of the second connection portion Cp2 may form an angular corner with the third side surface Sw3, or may form a rounded corner with the third side surface Sw3.

In the above embodiment, the expansion portion Ac1 substantially has the shape of an isosceles triangle with its base along the connection surface Cs1 as viewed in plan. However, the structure is not limited to this example. For example, the expansion portion Ac1 may substantially have the shape of a right triangle with its adjacent side along the connection surface Cs1 or another triangle as viewed in plan.

In other words, in the above embodiment, the angle α between the third side surface Sw3 and the connection surface Cs1 may or may not be equal to or substantially equal to the angle β between the second side surface Sw2 and the connection surface Cs1. For example, the angle α and the angle β may be different from each other.

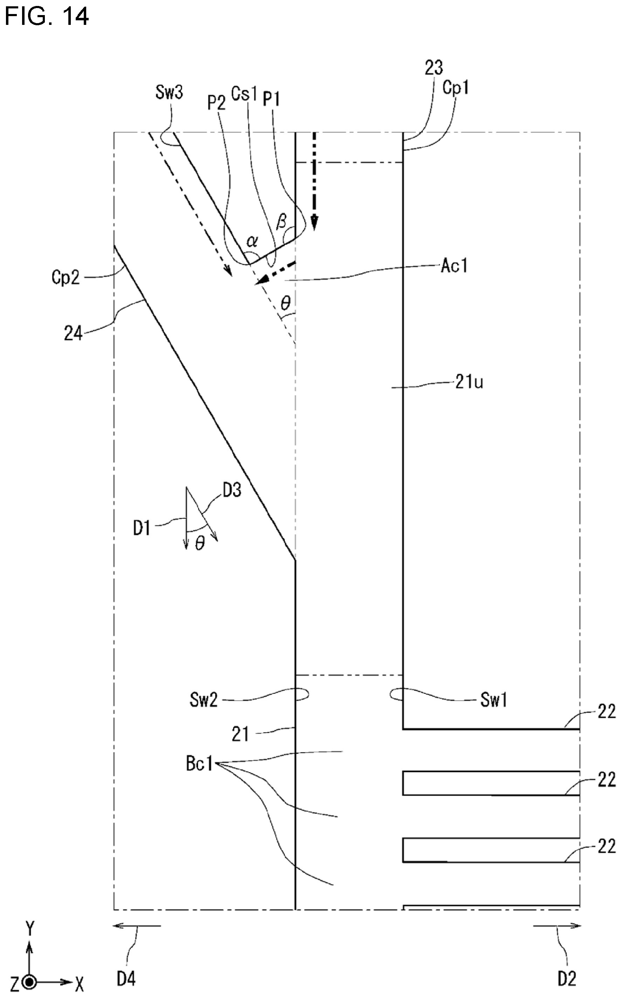

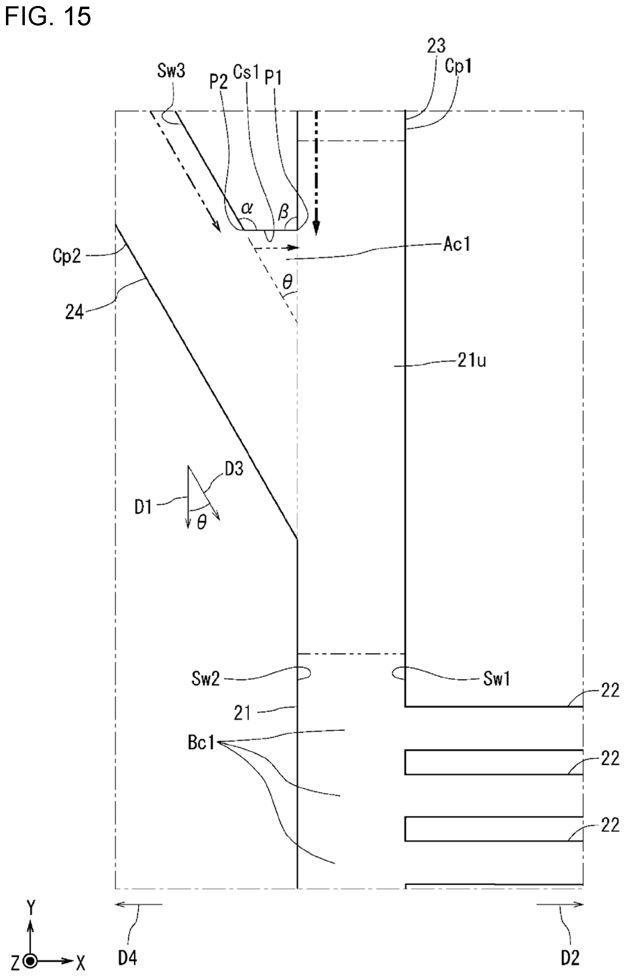

FIGs. 14 and 15 are each a schematic partial plan view of the channel section 2. More specifically, FIG. 14 is a schematic plan view illustrating the area corresponding to the area IV defined by the rectangular dot-dash line in FIG. 3 with another first example structure. FIG. 15 is a schematic plan view illustrating the area corresponding to the area IV defined by the rectangular dot-dash line in FIG. 3 with another second example structure. In each of FIGs. 14 and 15, the outer edge of the channel section 2 is drawn with a solid line. In each of FIGs. 14 and 15, an example flow direction of the first liquid L1 is schematically indicated by arrows drawn with thick two-dot-dash lines and an example flow direction of the second liquid L2 is schematically indicated by arrows drawn with two-dot-dash lines in a most upstream portion of the area in which the first liquid L1 and the second liquid L2 meet during the particle sorting process performed with the fluidic device 1.

For example, as illustrated in FIG. 14, the angle β may be greater than the angle α. For example, the angle β may be an obtuse angle, and the angle α may be an acute angle. In this case, during the particle sorting process performed with the fluidic device 1, for example, a part of the first liquid L1 flowing along the second side surface Sw2 and then along the connection surface Cs1 can be urged toward the first side surface Sw1 by a part of the second liquid L2 flowing along the third side surface Sw3. At the liquid junction, this structure allows, for example, the first liquid L1 flowing along the connection surface Cs1 to be urged toward the first side surface Sw1 by a part of the second liquid L2 flowing along the third side surface Sw3, with the urging direction closer to being perpendicular to the direction in which the first liquid L1 flows along the connection surface Cs1. This structure can reduce, for example, disturbances in the drawing flow and allow the second liquid L2 to direct the first liquid L1 toward the multiple branch channels 22 with a stronger force in the main channel 21. This can reduce the proportion of the second particle Pa12 (e.g., one or more second particles Pa12) that reaches the first downstream portion 21d among the multiple second particles Pa12 in the first liquid L1. This can thus reduce, for example, the number of second particles Pa12 mixed in the collection liquid collected from the first downstream portion 21d through, for example, the first outlet hole 33. The proportion of the first particle Pa11 (e.g., multiple first particles Pa11) as a particle of a specific type can thus be increased among multiple particles contained in the collection liquid. When the first liquid L1 is blood or blood diluted with saline and when the second liquid L2 is saline, for example, the above structure can increase the white blood cell purity defined as the proportion of one or more white blood cells (e.g., multiple white blood cells) among all blood cells in the white blood cell collection liquid as the collection liquid. The angle α closer to 90 degrees allows, for example, the first liquid L1 flowing along the connection surface Cs1 to be urged toward the first side surface Sw1 by a part of the second liquid L2 flowing along the third side surface Sw3, with the urging direction closer to being perpendicular to the direction in which the first liquid L1 flows along the connection surface Cs1.

For example, as illustrated in FIG. 15, the angle α may be greater than the angle β. For example, the angle α may be an obtuse angle, and the angle β may be an acute angle. In this case, during the particle sorting process performed with the fluidic device 1, for example, a part of the first liquid L1 flowing along the second side surface Sw2 can be urged toward the first side surface Sw1 by a part of the second liquid L2 flowing along the third side surface Sw3 and then along the connection surface Cs1. At the liquid junction, this structure allows, for example, the first liquid L1 flowing along the second side surface Sw2 to be urged toward the first side surface Sw1 by a part of the second liquid L2 flowing along the third side surface Sw3 and then along the connection surface Cs1, with the urging direction closer to being perpendicular to the direction in which the first liquid L1 flows along the second side surface Sw2. This structure can reduce, for example, disturbances in the drawing flow and allow the second liquid L2 to direct the first liquid L1 toward the multiple branch channels 22 with a stronger force in the main channel 21. This can reduce the proportion of the second particle Pa12 (e.g., one or more second particles Pa12) that reaches the first downstream portion 21d among the multiple second particles Pa12 in the first liquid L1. This can thus reduce, for example, the number of second particles Pa12 mixed in the collection liquid collected from the first downstream portion 21d through, for example, the first outlet hole 33. The proportion of the first particle Pa11 (e.g., multiple first particles Pa11) as a particle of a specific type can thus be increased among multiple particles contained in the collection liquid. When the first liquid L1 is blood or blood diluted with saline and when the second liquid L2 is saline, for example, the above structure can increase the white blood cell purity defined as the proportion of one or more white blood cells (e.g., multiple white blood cells) among all blood cells in the white blood cell collection liquid as the collection liquid. The angle β closer to 90 degrees allows, for example, the first liquid L1 flowing along the second side surface Sw2 to be urged toward the first side surface Sw1 by a part of the second liquid L2 flowing along the third side surface Sw3 and then along the connection surface Cs1, with the urging direction closer to being perpendicular to the direction in which the first liquid L1 flows along the second side surface Sw2.

The inventor has confirmed that, with the angle θ fixed to 30 degrees, disturbances in the drawing flow in the main channel 21 are substantially equally reduced when each of the angle α and the angle β is 105 degrees, when the angle α is 60 degrees and the angle β is 150 degrees, and when the angle α is 150 degrees and the angle β is 60 degrees. When the angle θ is 30 degrees and the sum of the angle α and the angle β is 210 degrees, for example, each of the angle α and the angle β may be 60 to 150 degrees inclusive.

In the above embodiment, for example, the first inlet hole 31, the second inlet hole 32, the first outlet hole 33, the second outlet hole 34, and the third outlet hole 35 are each open at the lower surface 1b. However, the structure is not limited to this example. For example, at least one of the first inlet hole 31, the second inlet hole 32, the first outlet hole 33, the second outlet hole 34, or the third outlet hole 35 may be open at the upper surface 1a without being open at the lower surface 1b. In other words, for example, each of the first inlet hole 31, the second inlet hole 32, the first outlet hole 33, the second outlet hole 34, and the third outlet hole 35 may be open at one of the upper surface 1a or the lower surface 1b.

In the above embodiment, the fluidic device 1 includes, for example, a single set of the first inlet hole 31 and the first introduction channel 23 as an introduction unit for the first liquid L1. However, the structure is not limited to this example. For example, the fluidic device 1 may include two or more sets of the first inlet hole 31 and the first introduction channel 23 as the introduction unit for the first liquid L1. In the above embodiment, the fluidic device 1 includes, for example, a single set of the second inlet hole 32 and the second introduction channel 24 as an introduction unit for the second liquid L2. However, the structure is not limited to this example. For example, the fluidic device 1 may include two or more sets of the second inlet hole 32 and the second introduction channel 24 as the introduction unit for the second liquid L2. Each of the introduction unit for the first liquid L1 and the introduction unit for the second liquid L2 may be appropriately connected to the main channel 21 to increase the proportion of the first particle Pa11 (e.g., multiple first particles Pa11) as a particle of a specific type among multiple particles contained in the collection liquid during the particle sorting process performed with the fluidic device 1.

In the above embodiment, for example, when the second liquid L2 is introduced into the fluidic device 1 from the second inlet opening 2i, a liquid suction unit may be connected to the second outlet hole 34 to suck the second liquid L2 from the main channel 21 through the multiple branch channels 22 and the second outlet hole 34. In this case, for example, a tubular member for connecting the liquid suction unit to the second outlet hole 34 may be externally connected to the fluidic device 1. The tubular member connecting the liquid suction unit to the second outlet hole 34 refers to the tubular member allowing a fluid to flow between the liquid suction unit and the second outlet hole 34. To connect the tubular member to the fluidic device 1, for example, the lower surface 1b of the fluidic device 1 may include a cylindrical portion protruding in the negative Z-direction and surrounding the second outlet hole 34 about a Z-axis as viewed in plan.

In the above embodiment, for example, the channel section 2 and the multiple holes 3 in the fluidic device 1 may not include the third discharge channel 27 as the seventh channel or the third outlet hole 35 as the fifth hole. In this case, for example, the first discharge channel 25 as the fifth channel may extend in the negative Y-direction as the first direction D1, in the same manner as the main channel 21. For example, the first discharge channel 25 as the fifth channel may be included in the main channel 21. In this case, the first outlet hole 33 may be directly connected to the first downstream portion 21d of the main channel 21. The collection liquid may be, for example, collected from the first downstream portion 21d through any of various paths.

In the above embodiment, for example, each of the first introduction channel 23, the second introduction channel 24, the first discharge channel 25, the second discharge channel 26, and the third discharge channel 27 may have a uniform or non-uniform width from the upstream portion to the downstream portion. For example, the first introduction channel 23 may include a portion with a width that is narrower in a continuous or a stepwise manner from the first inlet hole 31 toward the main channel 21. In other words, for example, the first introduction channel 23 may include a portion with a width that is narrower in a continuous or a stepwise manner toward the main channel 21. For example, the second introduction channel 24 may include a portion with a width that is narrower in a continuous or a stepwise manner from the second inlet hole 32 toward the main channel 21. In other words, for example, the second introduction channel 24 may include a portion with a width that is narrower in a continuous or a stepwise manner toward the main channel 21. For example, the first discharge channel 25 may include a portion with a width that is wider in a continuous or a stepwise manner from the main channel 21 toward the first outlet hole 33. In other words, for example, the first discharge channel 25 may include a portion with a width that is wider in a continuous or a stepwise manner away from the main channel 21. For example, the third discharge channel 27 may include a portion with a width that is wider in a continuous or a stepwise manner from the main channel 21 toward the third outlet hole 35. In other words, for example, the third discharge channel 27 may include a portion with a width that is wider in a continuous or a stepwise manner away from the main channel 21.

In the above embodiment, for example, the first liquid L1 may be a liquid containing the multiple types of particles Pa1 other than blood. In this case, the second liquid L2 may be, for example, any of various liquids appropriate for the first liquid L1. The various liquids may include, for example, water.

The fluidic device has been described in detail, but the above structures are illustrative in all aspects, and the present disclosure is not limited to the structures. The above embodiments may be combined in any manner unless any contradiction arises. Many examples other than those illustrated above may also be implemented without departing from the scope of the present disclosure.

The present disclosure provides the structures described below.

In one embodiment, (1) a fluidic device includes a channel section that is not open at an outer surface of the fluidic device and a plurality of holes each continuous with the channel section and open at the outer surface of the fluidic device. The channel section includes a first channel, a plurality of second channels, a third channel, and a fourth channel. The first channel extends straight in a first direction. The first channel includes a first downstream portion located in the first direction and a first upstream portion located opposite to the first downstream portion. The first channel includes a first side surface located in a second direction perpendicular to the first direction and a second side surface located in a fourth direction opposite to the second direction. Each of the plurality of second channels is connected to the first channel and is narrower than the first channel. Each of the plurality of second channels is open to the first side surface between the first upstream portion and the first downstream portion of the first channel. Each of the plurality of second channels includes a second downstream portion opposite to the first channel. The third channel includes a first connection portion connected to the first upstream portion. The first connection portion extends straight in the first direction toward the first upstream portion. The fourth channel includes a second connection portion connected to the first upstream portion. The second connection portion is open to the second side surface. The second connection portion extends straight toward the first upstream portion in a third direction forming an acute angle with the first direction. The second connection portion includes a third side surface adjacent to the first connection portion. The plurality of holes includes a first hole, a second hole, a third hole, and a fourth hole. The first hole is continuous with the first upstream portion through the third channel. The second hole is continuous with the first upstream portion through the fourth channel. The third hole is continuous with the first downstream portion. The fourth hole is continuous with the second downstream portion of each of the plurality of second channels. The channel section includes a connection surface connecting the second side surface and the third side surface. The second side surface and the connection surface are connected by a third portion. The third side surface and the connection surface are connected by a fourth portion. A distance between the third portion and the fourth portion is less than or equal to 1 times a width of the first channel in the second direction.

(2) In the fluidic device according to (1), the first direction and the third direction may form an angle of 15 to 45 degrees inclusive.

(3) In the fluidic device according to (2), the first direction and the third direction may form an angle of 30 degrees.

(4) In the fluidic device according to (2) or (3), the distance between the third portion and the fourth portion may be 0.1 to 0.5 times inclusive the width of the first channel in the second direction.

### REFERENCE SIGNS

1 fluidic device
2 channel section
21 main channel
21d first downstream portion
21u first upstream portion
22 branch channel
22d second downstream portion
23 first introduction channel
24 second introduction channel
3 hole
31 first inlet hole
32 second inlet hole
33 first outlet hole
34 second outlet hole
35 third outlet hole
Cp1first connection portion
Cp2second connection portion
Cs1 connection surface
D1 first direction
D2 second direction
D3 third direction
D4 fourth direction
L1 first liquid
L2 second liquid
Le1 first distance
P1 third portion
P2 fourth portion
Pa1 multiple types of particles
Pa11 first particle
Pa12 second particle
Sw1 first side surface
Sw2 second side surface
Sw3 third side surface
W1 first width

## Claims

1. A fluidic device, comprising:
a channel section,
wherein the channel section includes a first channel, a plurality of second channels, a third channel, and a fourth channel,
the first channel extends in a first direction,
the first channel includes a first portion at an end of the first channel in the first direction and a second portion at an end of the first channel opposite to the first portion,
the first channel includes a first side surface and a second side surface facing the first side surface in a second direction perpendicular to the first direction,
each of the plurality of second channels is open to the first side surface and is connected to the first channel between the first portion and the second portion, and is narrower than the first channel,
the third channel includes a first connection portion connected to the second portion,
the first connection portion extends in the first direction,
the fourth channel includes a second connection portion connected to the second portion,
the second connection portion extends in a third direction forming an acute angle with the first direction,
the second connection portion includes a third side surface adjacent to the first connection portion,
the channel section includes a connection surface connecting the second side surface and the third side surface, and
the second side surface and the connection surface are connected by a third portion, the third side surface and the connection surface are connected by a fourth portion, and a distance between the third portion and the fourth portion is less than or equal to 1 times a width of the first channel in the second direction.

2. The fluidic device according to claim 1, wherein
the first direction and the third direction form an angle of 15 to 45 degrees inclusive.

3. The fluidic device according to claim 2, wherein
the first direction and the third direction form an angle of 30 degrees.

4. The fluidic device according to claim 2 or claim 3, wherein
the distance between the third portion and the fourth portion is 0.1 to 0.5 times inclusive the width of the first channel in the second direction.
